# EUROPEAN PATENT APPLICATION

(11) **EP 4 502 531 A1**
(43) Date of publication of application: **05.02.2025**
(21) Application number: 23774025.3
(22) Date of filing: 24.03.2023
(51) Int. Cl.: G01B 11/24, G01B 11/245, G01B 11/00, G06T 17/20, G06T 17/00, G06T 3/40, G06T 5/50

(54) **THREE-DIMENSIONAL SCANNING SYSTEM, METHOD AND APPARATUS, AND MOBILE COMPUTING MODULE**

(30) Priority: 25.03.2022 CN 202210306518; 25.03.2022 CN 202210307307
(71) Applicant: Shining 3D Tech Co., Ltd., Hangzhou, Zhejiang 311258 (CN)
(72) Inventor: CHEN, Zefeng, Hangzhou, Zhejiang 311258 (CN); CHEN, Jinming, Hangzhou, Zhejiang 311258 (CN); LIU, Shuai, Hangzhou, Zhejiang 311258 (CN); LIU, Meng, Hangzhou, Zhejiang 311258 (CN); GONG, Wen, Hangzhou, Zhejiang 311258 (CN); LI, Chunxia, Hangzhou, Zhejiang 311258 (CN); CAO, Zhangyue, Hangzhou, Zhejiang 311258 (CN); FANG, Mingcai, Hangzhou, Zhejiang 311258 (CN); SONG, Ze, Hangzhou, Zhejiang 311258 (CN)
(74) Representative: Zaboliene, Reda
(86) International application number: PCT/CN2023/083867
(87) International publication number: WO 2023/179782

(57) **Abstract**

A three-dimensional scanning system, a method and an apparatus. The three-dimensional scanning system includes a three-dimensional scanner (100), a computing module (120), and a display module (130); the three-dimensional scanner (100) generates image data based on a plurality of installed image sensors (111), and performs a calculation of a three-dimensional reconstruction on the basis of the image data to determine target three-dimensional data; the computing module (120) is communicationally connected to the three-dimensional scanner (100) to obtain the target three-dimensional data generated by the three-dimensional scanner (100), and performs a calculation of a three-dimensional reconstruction according to the target three-dimensional data to generate a first three-dimensional model; the display module (130) is communicationally connected to the computing module (120) to obtain the first three-dimensional model generated by the computing module (120), and displays the first three-dimensional model in real time. The three-dimensional scanning system may generate at least part of the first three-dimensional model corresponding to an object in the object scanning process; an object scanning and a calculation of a three-dimensional reconstruction may be performed simultaneously; the first three-dimensional model can also be displayed in real time, facilitating subsequent adjustment of a scanning situation according to the displayed first three-dimensional model; the operation is flexible.

## Description

This disclosure claims a priority of a Chinese patent application filed with the Chinese Patent Office on March 25, 2022, with an application number 2022103073070, and titled "MOBILE COMPUTING MODULE, THREE-DIMENSIONAL SCANNING METHOD AND APPARATUS FOR THREE-DIMENSIONAL SCANNER", and claims a priority of a Chinese patent application filed with the Chinese Patent Office on March 25, 2022, with an application number 2022103065182, and titled "THREE-DIMENSIONAL SCANNING SYSTEM, METHOD AND APPARATUS", all contents of which are incorporated by reference in this disclosure.

### TECHNICAL FIELD

The present disclosure relates to a field of three-dimensional scanning technology, and in particular to a three-dimensional scanning system, a method, an apparatus and a mobile computing module.

### BACKGROUND

At present, three-dimensional (3D) scanners have been widely used in many industries. The three-dimensional scanner collects image data of an object through 3D scanning devices, and then transmits the collected image data to a computer through a wired connection for a three-dimensional reconstruction calculation to obtain a first three-dimensional model of the object.

However, the three-dimensional scanner needs to be connected to the computer via a wire, which makes it inconvenient to carry, and its operating range is very limited, making it unable to adapt to complex scenarios. In addition, an amount of image data scanned by the three-dimensional scanner is relatively large, and when they are transmitted to the computer for processing, a requirement for a transmission bandwidth is relatively high, which results in a relatively high cost.

### SUMMARY

### (I) Technical problem to be resolved.

A technical problem to be solved by the present disclosure is that an existing three-dimensional scanner cannot adapt to complex scenes.

### (II) Technical solution.

In order to solve the above technical problem, an embodiment of the present disclosure provides a three-dimensional scanning system, comprising a three-dimensional scanner, a computing module, and a display module; the three-dimensional scanner generating image data based on image sensors, and performing a calculation of a three-dimensional reconstruction based on the image data to determine target three-dimensional data; the computing module being communicatively connected to the three-dimensional scanner to obtain the target three-dimensional data generated by the three-dimensional scanner, and perform the calculation of the three-dimensional reconstruction according to the target three-dimensional data to generate a first three-dimensional model; the display module being communicatively connected to the computing module to obtain the first three-dimensional model generated by the computing module, and displaying the first three-dimensional model in real time.

In a second aspect, a three-dimensional scanning method is also provided, which is applied to a three-dimensional scanner comprising a plurality of image sensors, the method comprises:
Obtaining image data generated by the image sensors based on an object to be scanned;
Performing a calculation of a three-dimensional reconstruction according to the image data to determine target three-dimensional data, and the target three-dimensional data being used to generate a first three-dimensional model corresponding to the object to be scanned, the target three-dimensional data comprising point cloud three-dimensional data corresponding to laser lines output by the three-dimensional scanner and marking point three-dimensional data corresponding to at least one marking point on the object to be scanned.

In a third aspect, a three-dimensional scanning method is also provided, which is applied to a terminal, and the method comprising:
Obtaining three-dimensional data of an object to be scanned generated by a three-dimensional scanner;
Determining a target fusion mode according to a generation situation of a first three-dimensional model corresponding to the object to be scanned, and in the target fusion mode, performing a calculation of a three-dimensional reconstruction according to the three-dimensional data to generate the first three-dimensional model, the target fusion mode comprising a global fusion mode and/or a real-time fusion mode.

In a fourth aspect, a three-dimensional scanning apparatus is provided, which is applied to a three-dimensional scanner. The three-dimensional scanner comprises a plurality of image sensors, the apparatus comprises:
An acquisition unit, being used for acquiring image data generated by the image sensors based on an object to be scanned;
A determination unit, being used for performing a calculation of a three-dimensional reconstruction according to the image data to determine target three-dimensional data, and the target three-dimensional data being used to generate a first three-dimensional model corresponding to the object to be scanned, the target three-dimensional data comprising laser lines output by the three-dimensional scanner and three-dimensional data corresponding to at least one marking point on the object to be scanned.

In a fifth aspect, a three-dimensional scanning apparatus is also provided, which is applied to a terminal, and the apparatus comprises:
An acquisition unit, being used for acquiring three-dimensional data of an object to be scanned generated by a three-dimensional scanner;
A generation unit, being used for determining a target fusion mode according to a generation situation of a first three-dimensional model corresponding to the object to be scanned, and in the target fusion mode, performing a calculation of a three-dimensional reconstruction according to the three-dimensional data to generate the first three-dimensional model, the target fusion mode comprising a global fusion mode and/or a real-time fusion mode.

In the sixth aspect, a mobile computing module for a three-dimensional scanner is also provided, wherein the mobile computing module comprises a communication component and a computing component, wherein the mobile computing module is communicatively connected to the three-dimensional scanner via the communication component to obtain image data generated by the three-dimensional scanner; the computing component performs a calculation of at least partial three-dimensional reconstruction on the image data; the mobile computing module is communicatively connected to the display module via the communication component to send a calculation result of the computing component to the display module, and the display module is used to display the three-dimensional model obtained based on the calculation result.

In a seventh aspect, a three-dimensional scanning method is also provided, which is applied to the mobile computing module, and the method comprises:
Acquiring image data corresponding to an object to be measured generated by a three-dimensional scanner;
Performing a calculation of at least partial three-dimensional reconstruction according to the image data, and sending a calculation result to a display module connected to the mobile computing component for display, and the display module being used for displaying a three-dimensional model of the object to be measured obtained based on the calculation result.

In an eighth aspect, a three-dimensional scanning apparatus is also provided, which is applied to the mobile computing module, and the apparatus comprises:
An acquisition unit, being used for acquiring image data corresponding to an object to be measured generated by a three-dimensional scanner;
A computing unit, being used for performing a calculation of at least partial three-dimensional reconstruction according to the image data, and sending a calculation result to a display module connected to the mobile computing component for display, and the display module being used to display a three-dimensional model of the object to be measured obtained based on the calculation result.

In a ninth aspect, an electronic device is also provided, comprising:
A storage device;
A processor; and
A computer program;
The computer program is stored in the storage device and is configured to be executed by the processor to implement the three-dimensional scanning method as described above.

In a tenth aspect, a computer-readable storage medium is also provided, on which a computer program is stored, and the computer program is executed by a processor to implement the three-dimensional scanning method of the above embodiments.

### (III) Beneficial effects

Compared with the prior art, the above technical solution provided by the embodiments of the present disclosure has the following advantages:
The embodiment of the present disclosure provides the three-dimensional scanning system, which includes the three-dimensional scanner, the computing module and the display module. The three-dimensional scanner generates image data based on the plurality of image sensors that have been installed, and performs the calculation of the three-dimensional reconstruction based on the image data to determine target three-dimensional data. The computing module is communicatively connected with the three-dimensional scanner to obtain the target three-dimensional data generated by the three-dimensional scanner, and performs a calculation of a three-dimensional reconstruction according to the target three-dimensional data to generate a first three-dimensional model. The display module is connected in communication with the computing module to obtain the first three-dimensional model generated by the computing module, and displays the first three-dimensional model in real time. The three-dimensional scanning system provided by the present disclosure can generate at least a part of the first three-dimensional model corresponding to the object during a scanning process, that is, scanning of the object and the calculation of the three-dimensional reconstruction can be performed simultaneously, and the first three-dimensional model can also be displayed in real time, so as to facilitate a subsequent adjustment of a scanning situation according to the displayed first three-dimensional model. The operation is relatively flexible and can be applied to relatively complex application scenarios.

It is to be understood that a foregoing general description and following detailed description are exemplary and explanatory only and are not restrictive of the present disclosure.

### BRIEF DESCRIPTION OF THE DRAWINGS

Accompanying drawings, which are incorporated in and constitute a part of this specification, illustrate embodiments consistent with the present disclosure and, together with the description, serve to explain a principle of the present disclosure.

In order to more clearly illustrate the embodiments of the present disclosure or the technical solution in a prior art, drawings required for use in the embodiments or the description of the prior art will be briefly introduced below. Obviously, for an ordinary skilled in the art, other drawings can be obtained based on these drawings without paying any creative labor.
FIG. 1 is a schematic diagram of a structure of a three-dimensional scanning system provided by an embodiment of the present disclosure;
FIG. 2 is a schematic diagram of a structure of another three-dimensional scanning system provided by an embodiment of the present disclosure;
FIG. 3 is a schematic diagram of a flow chart of a method for generating three-dimensional data provided in an embodiment of the present disclosure;
FIG. 4 is a schematic diagram of a flow chart of a method for generating a first three-dimensional model provided by an embodiment of the present disclosure;
FIG. 5 is a schematic diagram of a flow chart of a three-dimensional scanning method provided in an embodiment of the present disclosure;
FIG. 6 is a schematic diagram of a flow chart of a three-dimensional scanning method provided in an embodiment of the present disclosure;
FIG. 7 is a schematic diagram of a structure of a three-dimensional scanning system provided by an embodiment of the present disclosure;
FIG. 8 is a schematic diagram of a structure of a mobile computing module for a three-dimensional scanner provided by an embodiment of the present disclosure;
FIG. 9 is a schematic diagram of a structure of another mobile computing module for a three-dimensional scanner provided by an embodiment of the present disclosure;
FIG. 10 is a schematic diagram of a flow chart of a three-dimensional scanning method provided in an embodiment of the present disclosure;
FIG. 11 is a schematic diagram of a structure of a three-dimensional scanning apparatus provided in an embodiment of the present disclosure;
FIG. 12 is a schematic diagram of a structure of a three-dimensional scanning apparatus provided in an embodiment of the present disclosure;
FIG. 13 is a schematic diagram of a structure of a three-dimensional scanning apparatus provided in an embodiment of the present disclosure;
FIG. 14 is a schematic diagram of a structure of an electronic device provided in an embodiment of the present disclosure.

### DETAILED DESCRIPTION

In order to make purposes, technical solutions and advantages of the embodiments of the present disclosure clearer, the technical solutions in the embodiments of the present disclosure will be clearly and completely described below. Obviously, the described embodiments are part of the embodiments of the present disclosure, not all of the embodiments. Based on the embodiments in the present disclosure, all other embodiments obtained by the ordinary skilled in the art without creative work are within a scope of a protection of the present disclosure.

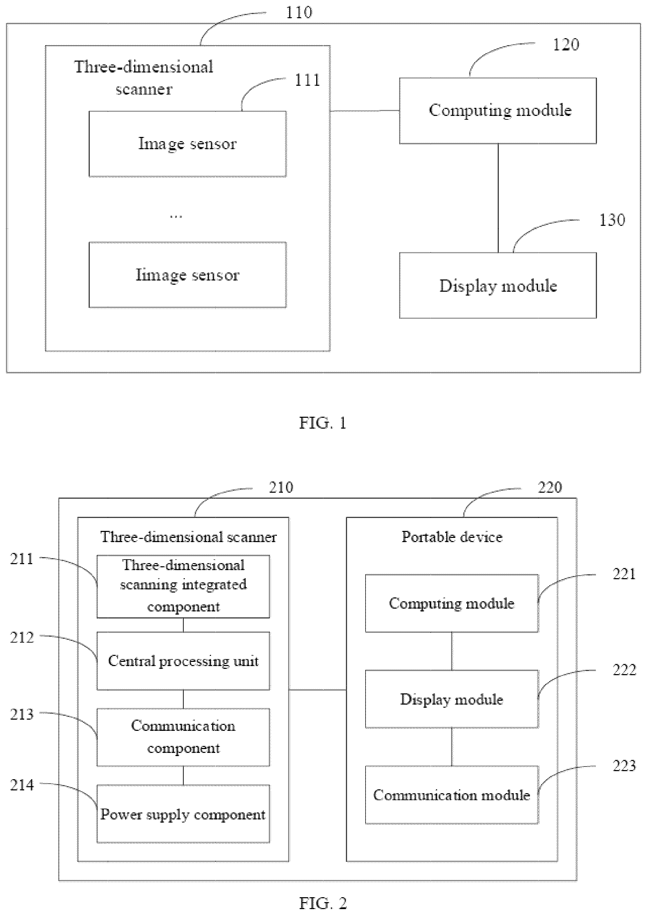

FIG. 1 is a schematic diagram of a structure of a three-dimensional scanning system provided by an embodiment of the present disclosure, which specifically includes a structure shown in FIG. 1. FIG. 1 includes a three-dimensional scanner 110, a computing module 120 and a display module 130. The three-dimensional scanner 110 generates image data based on multiple image sensors 111 that are installed, and determines target three-dimensional data based on the image data; the computing module 120 is communicated with the three-dimensional scanner 130 to obtain the target three-dimensional data generated by the three-dimensional scanner 110, and performs a three-dimensional reconstruction according to the target three-dimensional data to generate a first three-dimensional model; the display module 130 is communicated with the computing module 120 to obtain the first three-dimensional model generated by the computing module 130, and displays the first three-dimensional model in real time.

It is understandable that the computing module 120 and the display module 130 can be configured in a same portable device, and the portable device can be understood as a portable personal computer (PC), such as a,{ HYPERLINK "https://baike.baidu.com/item/%E7%AC%94%E8%AE%B0%E6%9C%AC%E7%94%B5%E8%84%91/213561" \t "https://baike.baidu.com/item/%E4%B8%AA%E4%BA%BA%E8%AE%A1%E7%AE%97%E6%9C%BA/_blank" }, {HYPERLINK "https://baike.baidu.com/item/%E5%B9%B3%E6%9D%BF%E7%94%B5%E8%84%91/1348389" \t "https://baike.baidu.com/item/%E4%B8%AA%E4%BA%BA%E8%AE%A1%E7%AE%97%E6%9C%BA/_blank"}, or a smart terminal. The following uses the tablet computer as the portable device as an example to describe the three-dimensional scanning system. The three-dimensional scanning system includes the three-dimensional scanner 110 and the portable device. The three-dimensional scanner 110 and the portable device can be integrated or separated, that is, the three-dimensional scanner 110 is an independent module, and the portable device is an independent module. The portable device can be used with different three-dimensional scanners 110 for scanning. In the embodiment of the present disclosure, a separate configuration is used for description, and the portable device and the three-dimensional scanner 110 are connected through a wireless communication. The portable device includes a computing module 120, a display module 130, and a communication module, where the computing module includes an M1 chip or a chip with a higher model, which has a graphics processing technology, and can perform a calculation of a three-dimensional reconstruction to generate a first three-dimensional model in real time based on three-dimensional data; the communication module can be a cellular communication module, and a cellular communication adopts a cellular wireless networking method to connect a terminal and a network device through a wireless channel, that is, the three-dimensional scanner 110 and the portable device are connected through a wireless channel, which facilitates a communication connection between the portable device and the three-dimensional scanner 110 to perform a wireless transmission. Specifically, the computing module 120 is configured with a three-dimensional scanning software, and the three-dimensional scanning software provides algorithm services, Hyper Text Transfer Protocol (HTTP) services, rendering services, and data transmission services for the portable device, that is, the portable device interacts with the three-dimensional scanner 110 through the three-dimensional scanning software and generates a first three-dimensional model; the display module 130 is a display screen of the portable device, which is used to display the first three-dimensional model constructed by the computing module 120 in real time.

For example, refer to FIG. 2, which is a schematic diagram of a structure of another three-dimensional scanning system provided in an embodiment of the present disclosure. FIG. 2 includes a three-dimensional scanner 210 and a portable device 220. The three-dimensional scanner 210 includes a three-dimensional scanning integrated component 211, a central processing unit 212, a communication component 213, and a power supply component 214. The portable device 220 includes a computing module 221, a display module 222, and a communication module 223. When the three-dimensional scanner 210 is a laser scanner, the three-dimensional scanning integrated component 211 includes one or more image sensors and a projection device. The projection device may include a laser device. The laser device is used to emit laser lines to an object to be scanned. The image sensor is used to capture an image of a surface of the object to be scanned to generate image data. The laser device may be a laser projector. When the laser three-dimensional scanner scans an object, the laser projector of the laser three-dimensional scanner projects laser lines to the object, and the image sensor of the three-dimensional scanner synchronously captures the image of the surface of the object covered with the laser lines. Then the image data includes features of the laser lines. The projection device may include an LED flashing light. When the LED flashing light is illuminated, the image sensor captures the marking point attached to the surface of the object. Then the image data includes features of the marking point. The projection device may also include a speckle projector. The speckle projector may be a DLP projector. The three-dimensional scanner can scan the object in a speckle mode. The speckle projector of the three-dimensional scanner projects a speckle pattern onto the surface of the object, and the image sensor of the three-dimensional scanner synchronously captures an image of the surface of the object covered with the speckle pattern. At this time, the image data includes features of the speckle pattern. It should be noted that the projection device can also project other structured light patterns. Of course, the three-dimensional scanner can include only one projection device or multiple projection devices. The three-dimensional scanner can have only one scanning mode or multiple scanning modes. In addition, the three-dimensional scanning integrated component and the central processing unit can be integrated or separately arranged; the communication component 213 is used to communicate with the portable device 220, and the power supply component 214 is used to power the three-dimensional scanner 210 to provide power required by various components running on the three-dimensional scanner 210. When the communication component includes a wireless communication component, the power supply component includes a lithium battery. The computing module 221 in the portable device 220 uses the M1 chip to provide computing power to complete a real-time construction of the first three-dimensional model. The display module 220 is used to display the first three-dimensional model in real time. The communication component 223 is used to communicate with the three-dimensional scanner 210 based on the communication component 213 to complete data transmission. The communication component 223 also provides a http service to facilitate an import and an export of project files that are generated.

Optionally, the three-dimensional scanner 210 generates image data based on multiple image sensors that are installed, and determines target three-dimensional data based on the image data, specifically including: the three-dimensional scanner 210 obtains multiple image data of the object to be scanned based on the multiple image sensors that are installed, and determines target three-dimensional data output by the three-dimensional scanner 210 by performing a calculation of a three-dimensional reconstruction based on the multiple image data, where the target three-dimensional data includes three-dimensional data corresponding to the laser lines and at least one marking point on the object to be scanned.

Optionally, the three-dimensional scanning system includes a laser scanning mode. In the laser scanning mode, the image data includes features of the laser lines and features of the marking point. A calculation of a three-dimensional reconstruction is performed based on the features of the laser lines in the image data to generate point cloud three-dimensional data. A calculation of a three-dimensional reconstructions is performed based on the features of the marking point in the image data to generate marking point three-dimensional data. The target three-dimensional data includes the point cloud three-dimensional data and the marking point three-dimensional data.

It is understandable that before using the three-dimensional scanner for scanning, at least one marking point is pasted on the object to be scanned, and the marking point can be a point that is eye-catching and easy to detect and identify. After the at least one marking point is set, the three-dimensional scanner 210 scans the object that has been marked. The three-dimensional scanner projects a structured light pattern to the surface of the object to be scanned based on a projector, illuminates the at least one marking point based on a flashing LED light, and captures the surface of the object to be scanned based on the image sensors to generate the image data. The image data includes information of the structured light pattern and information of the marking point. The information of the structured light pattern and the information of the marking point are extracted based on the image data. A three-dimensional reconstruction is performed based on the information of the structured light pattern to obtain point cloud three-dimensional data. A three-dimensional reconstruction is performed based on the information of the marking point to obtain the marking point three-dimensional data, that is, the target three-dimensional data includes the point cloud three-dimensional data and the marking point three-dimensional data. The projector can also be a DLP or a laser projector. Taking a laser three-dimensional scanner as an example, the laser device emits the laser lines on the surface of the object, and multiple image sensors are installed to capture images including at least one marking point and multiple laser lines to generate multiple image data. The laser device can emit multiple laser lines at the same time, such as seven laser lines, fourteen laser lines or forty-eight laser lines. Each laser line emitted by the laser device is composed of multiple laser points. For example, the three-dimensional scanner 210 includes two image sensors on each side. The two image sensors capture the object at the same time to generate two image data. The two image data can be understood as two data corresponding to one image frame that is collected. The following three-dimensional data obtained from the two image data can be recorded as the three-dimensional data corresponding to one image frame, each image data includes multiple laser lines and at least one marking point, and each of the two image data includes at least one identical marking point and multiple identical laser lines; then the central processing unit 212 in the three-dimensional scanner 210 determines the three-dimensional data corresponding to the laser lines and the three-dimensional data corresponding to the marking point by performing the calculation of the three-dimensional reconstruction based on a binocular matching principle according to the features of the laser lines and the features of the marking point in the two image data and, that is, the three-dimensional reconstruction of the laser lines and the three-dimensional reconstruction of the marking point are performed, and the three-dimensional data include three-dimensional coordinates of multiple laser points on the laser line, a number of laser points, and three-dimensional coordinates of the marking point, a number of the marking points, and the three-dimensional coordinates of the multiple laser points and the three-dimensional coordinates of the marking point are in a same coordinate system. Specifically, the three-dimensional scanner performs the calculation of the three-dimensional reconstruction on the image data based on a graphics processing unit (GPU) to determine the target three-dimensional data.

Optionally, the display module 222 further includes an editing component, and the editing component is used to edit a first three-dimensional model displayed by the display module 222.

It can be understood that after the computing module 221 receives the three-dimensional data sent by the three-dimensional scanner 210, it performs the calculation of the three-dimensional reconstruction based on the three-dimensional data to generate the first three-dimensional model, and the first three-dimensional model is a first three-dimensional model of at least a partial of the object to be scanned. The three-dimensional scanner 210 transmits the target three-dimensional data corresponding to each image frame to the computing module 221, and the computing module 221 splices and fuses the target three-dimensional data corresponding to multiple image frames. The computing module 221 renders incremental data in the target three-dimensional data corresponding to each image frame and generates the first three-dimensional model, which is then displayed through the display module. For example, the display module 222 can display a first three-dimensional model corresponding to 1/3 of the object or a first three-dimensional model corresponding to 1/2 of object as the scanner scans, that is, the first three-dimensional model is displayed in real time. At a time T, the first three-dimensional model displayed by the display module only includes a model A. At a time T + 1, a model B is obtained by rendering the incremental data, and the model A and the model B is used to generate the first three-dimensional model to be displayed at time T+1. Then the display module displays the model A and the model B at the same time. By realizing the display of the first three-dimensional model, it is convenient for the user to determine whether the scanned data is accurate. If there is a difference between the first three-dimensional model and the object, that is, the scanned data may be inaccurate, the scanning method can be adjusted in time at a scanning site. The display module 222 also includes an editing component, which is used to edit the displayed first three-dimensional model when the display module 222 displays the first three-dimensional model in real time, such as adjusting, deleting or modifying the first three-dimensional model, to obtain a valid first three-dimensional model.

Optionally, after the computing module 221 generates the first three-dimensional model, the computing module 221 generates and stores a project file according to a preset configuration file, target three-dimensional data, and the first three-dimensional model. The project file is used to generate a second three-dimensional model on at least one other terminal. The second three-dimensional model is the first three-dimensional model or a three-dimensional model generated by performing a calculation of a three-dimensional reconstruction according to the target three-dimensional data and second preset fusion parameter.

It is understandable that after the computing module 221 generates the first three-dimensional model, the computing module 221 generates the project file according to an engineering configuration file, pre-stored target three-dimensional data corresponding to each image frame, and the valid first three-dimensional model that has been determined. The project file can then be exported, stored, and sent to at least one other terminal for a precise calculation. The terminal can be a computer with a relatively high computing power. The at least one other terminal generate a second three-dimensional model according to the project file, where the second three-dimensional model may be the first three-dimensional model, or may be a more accurate three-dimensional model obtained by performing the calculation of the three-dimensional reconstruction by the at least one other terminal according to the target three-dimensional data and second preset fusion parameter. The second preset fusion parameter include a second point distance, which is smaller than a first point distance in the first preset fusion parameter. The following embodiments are described by taking a computer receiving a project file as an example.

Optionally, if a precision of the first three-dimensional model needs to be further improved, following operations can be performed after the terminal receives the project file: generating global point cloud three-dimensional data according to the second preset fusion parameter and the target three-dimensional data in the project file; generating a second three-dimensional model by rendering the global point cloud three-dimensional data.

It is understandable that the portable device 220 establishes an HTTP service, an IP address and a port number corresponding to the HTTP service is input on the computer, the project file is selected to be exported, and the project file is downloaded to the computer. After the computer downloads the project file, if the first three-dimensional model in the project file does not meet a requirement of a precision, a second three-dimensional model with a higher precision is reconstructed according to the three-dimensional data corresponding to each image frame in the project file and the second preset fusion parameter. It is understandable that the precision of the three-dimensional model corresponding to the point cloud three-dimensional data optimized with different point distance is different. For example, the computing module in the portable device can choose to obtain the first three-dimensional model based on the global point cloud three-dimensional data optimized with a large point distance. The large point distance refers to the first point distance in the first preset fusion parameter, so as to reduce an amount of calculation and a memory usage of the computing module to achieve a purpose of displaying the first three-dimensional model in real-time. It can also scan relatively large objects. However, a precision of the first three-dimensional model constructed by the global point cloud three-dimensional data optimized by a large point distance is low. Later, according to user needs, the computer can use a small point distance to optimize and fuse the three-dimensional data corresponding to each image frame in the project file, and reconstruct a second three-dimensional model with a higher precision. The small point distance refers to the second point distance in the second preset fusion parameter, where the large point distance (the first point distance) refers to a point cloud distance greater than or equal to 0.3 mm, and the small point distance (the second point distance) refers to a point cloud distance of less than 0.3 mm. It is understandable that after the computer renders the global point cloud three-dimensional data through a rendering module, the second three-dimensional model generated after rendering is displayed on the computer display. The second three-dimensional model can be adjusted through an edit button to obtain a more accurate second three-dimensional model.

Optionally, the three-dimensional scanner and the portable device are separately arranged, and the three-dimensional scanner is equipped with a processing module, a projector and an image sensor, and the processing module is communicatively connected with the projector, the image sensor and the portable device respectively; the portable device includes a shell, and components of the portable device are arranged in the shell.

Optionally, the three-dimensional scanner is integrated with the portable device, the three-dimensional scanner is equipped with a projector and an image sensor, and the portable device is communicatively connected with the projector and is communicatively connected with the image sensor.

The embodiments provided by the present disclosure also include the following:
The three-dimensional scanning system includes a three-dimensional scanner and a portable computer. The three-dimensional scanner includes a scanning module and a first computing module. The portable computer includes a second computing module and a display module. The three-dimensional scanner is communicatively connected with the portable computer.

The scanning module includes a projector and an image sensor. The projector projects light toward an object to be measured. The image sensor acquires an image of a surface of the object to be measured to generate image data. The image data is transmitted by the image sensor to the first computing module. The first computing module performs a calculation of a three-dimensional reconstruction on the image data to generate target three-dimensional data.

The projector includes a laser projector, and the scanning module includes a laser scanning mode. For example, the projector projects laser lines to the surface of the object to be measured, and the image sensor obtains the image of the surface of the object to be measured to generate image data, and the image data includes the features of the laser lines; the projector includes an LED flashing light, and a marking point is pasted to the surface of the object to be measured, and the LED flashing light flashes to illuminate the marking point, and the image sensor obtains the image of the surface of the object to be measured to generate image data, and the image data includes the features of the marking point; the projector may include the laser projector and the LED flashing light, and the laser projector and the LED flashing light may work synchronously, so that the image data obtained by the image sensor includes the features of the laser lines and the features of the marking point; of course, the projector may further include a projector in another form such as a DLP projector. The DLP projector may project a speckle pattern, and the scanning module includes a speckle scanning mode. The DLP projector may project a stripe pattern, and the scanning module includes a stripe scanning mode. Various forms of projectors may be configured separately or in combination. The scanning module may include only a single scanning mode or multiple scanning modes. When the scanning module includes multiple scanning modes, the scanning mode may be switched for scanning. It should be noted that the LED flashing light is usually configured in combination with the laser projector.

Only one image sensor or multiple image sensors may be provided. When only one image sensor is provided, the scanning module is a monocular scanning module. When multiple image sensors are provided, the scanning module may include a monocular scanning unit or a multi-eye scanning unit, or may include multiple scanning units, for example, include the monocular scanning unit and a binocular scanning unit. When the scanning module acquires image data based on the monocular scanning module or the monocular scanning unit, the first computing module reconstructs the target three-dimensional data based on a monocular reconstruction principle. When the scanning module acquires image data based on the binocular scanning module/binocular scanning unit, the first computing module reconstructs the target three-dimensional data based on a binocular reconstruction principle.

The scanning module and the first computing module can be integrated and arranged in a single housing of the three-dimensional scanner. The scanning module and the first computing module can also be separately configured, the scanning module is configured with an independent housing and the first computing module is configured with an independent housing.

The first computing module is preferably a GPU computing module, which performs a parallel computing on image data.

The three-dimensional scanner includes a power module for supplying power to various components in the three-dimensional scanner. The power module includes a battery, preferably a lithium battery, so that the three-dimensional scanner is free from constraints of a power cord.

The three-dimensional scanner includes a first communication module, and the three-dimensional scanner is connected to the portable computer through the first communication module. The first communication module includes a wired communication unit and/or a wireless communication unit. With a support of the lithium battery and the wireless communication unit, the three-dimensional scanner can get rid of constraints of cables and scan more freely.

The portable computer includes a second communication module, which is communicatively connected to the first communication module. The second communication module includes a wired communication unit and/or a wireless communication unit. In the disclosed embodiment, the wireless communication unit is preferably a cellular communication module.

The portable computer is configured with a real-time fusion mode. In the real-time fusion mode, the second computing module performs a real-time fusion through a real-time computing unit, and the display screen performs an incremental rendering through a real-time rendering unit.

The real-time computing unit obtains target three-dimensional data of a current frame and target three-dimensional data of all frames before the current frame that are generated by the three-dimensional scanner, determines a first rotation-translation relationship between the target three-dimensional data of the current frame and a reference coordinate system based on a common feature between the target three-dimensional data of the current frame and the target three-dimensional data of all frames before the current frame, and fuses the target three-dimensional data of the current frame into a previous first three-dimensional model according to the first rotation-translation relationship and the first preset fusion parameter to generate a current first three-dimensional model, and the reference coordinate system is a coordinate system in which the first three-dimensional model is located.

The real-time computing unit transmits the first three-dimensional model that has been incremented to a real-time display unit, and the real-time display unit renders and displays the first three-dimensional model that has been incremented.

The portable computer is configured with a global fusion mode. In the global fusion mode, the second computing module performs a global fusion through a global computing unit, and the display screen is rendered and displayed through a global rendering unit.

The global computing unit obtains target three-dimensional data of all frames generated by the three-dimensional scanner, determines a second rotation-translation relationship between the target three-dimensional data of all frames and the reference coordinate system based on a common feature of target three-dimensional data of all frames, generates a first three-dimensional model by fusing the target three-dimensional data of all frames according to the second rotation-translation relationship and the first preset fusion parameter, where the reference coordinate system is the coordinate system in which the first three-dimensional model is located.

The global computing unit transmits the first three-dimensional model to the display, and the display renders and displays the first three-dimensional model.

In the disclosed embodiment, during a real-time scanning process of the three-dimensional scanner, the second computing module synchronously runs the real-time fusion mode, and after the three-dimensional scanner completes the scanning, the second computing module runs the global fusion mode. The computing module obtains a signal indicating that the three-dimensional scanner has completed the scanning, and enters the global fusion mode based on the signal. The second computing module is preferably a CPU computing module.

The portable computer includes a storage module. The target three-dimensional data generated by the three-dimensional scanner is transmitted to the portable computer and stored in the storage module. The second computing module obtains the target three-dimensional data from the storage module for fusion.

The following is a further detailed description in combination with the laser scanning mode:
The laser projector of the scanning module projects laser lines toward the surface of the object to be measured which is pasted with the marking point, and the LED flashing light works synchronously. The two image sensors of the scanning module synchronously acquire the image of the surface of the object to be measured to generate image data, and the image data includes features of the laser lines and features of the marking point. The scanning module transmits the image data to the first computing module, and the first computing module extracts the features of the laser lines and the features of the marking point in the image data. The first computing module matches based on the features of the laser lines and the features of the marking point in the two image sensors, and performs a binocular stereo vision reconstruction based on the matched features of the laser lines to generate point cloud three-dimensional data. The binocular stereo vision reconstruction is performed based on the matched features of the marking point to generate marking point three-dimensional data. The target three-dimensional data includes the point cloud three-dimensional data and the marking point three-dimensional data. Each time the scanning module generates image data of one frame(image data synchronously acquired by the multi-eye scanning module is counted as image data of one frame), the first computing module generates target three-dimensional data of one frame based on image data of the one frame, and the target three-dimensional data of one frame includes point cloud three-dimensional data of the one frame and marking point three-dimensional data of the one frame.

The first computing module transmits the target three-dimensional data to the portable computer, and the portable computer obtains the target three-dimensional data of one frame and stores it in the storage module.

The real-time computing unit of the portable computer obtains the target three-dimensional data of the current frame and the target three-dimensional data of all frames before the current frame, tracks and splices according to the common marking point feature between the marking point three-dimensional data of the current frame and the marking point three-dimensional data of all frames before the current frame, determines the first rotation-translation relationship between the marking point three-dimensional data of the current frame and the reference coordinate system, splices and fuses the point cloud three-dimensional data of the current frame into the previous first three-dimensional model according to the first rotation-translation relationship and the first preset fusion parameter, and generates the current first three-dimensional model. The target three-dimensional data of all frames before the current frame refers to three-dimensional data of one or more frames acquired by the three-dimensional scanner before the three-dimensional data of the current frame is acquired, and the previous first three-dimensional model refers to the first three-dimensional model obtained by splicing and fusing the target three-dimensional data of all frames before the current frame in real time by the real-time computing unit.

The real-time computing unit transmits the first three-dimensional model that has been incremented to the real-time display unit, and the real-time display unit renders and displays the first three-dimensional model that has been incremented.

After the scanner completes the scan, the global computing unit of the portable computer obtains target three-dimensional data of all frames generated by the three-dimensional scanner, determines the second rotation-translation relationship between three-dimensional data of the marking point of all frames and the reference coordinate system based on common marking point feature in three-dimensional data of the marking point of all frames, and splices and fuses point cloud three-dimensional data of all frames according to the second rotation-translation relationship and the first preset fusion parameter to generate the first three-dimensional model. Of course, if the first three-dimensional model obtained by the real-time computing unit meets the requirement, it may not be globally optimized under the global computing unit.

The embodiment of the present disclosure provides the three-dimensional scanning system, which includes the three-dimensional scanner, the computing module, and the display module. The three-dimensional scanner generates image data based on a plurality of image sensors that are installed, and performs the calculation of the three-dimensional reconstruction based on the image data to determine the three-dimensional data. The computing module is connected with the three-dimensional scanner to obtain the three-dimensional data generated by the three-dimensional scanner, and performs the calculation of the three-dimensional reconstruction based on the three-dimensional data to generate the first three-dimensional model. The display module is connected with the computing module to obtain the first three-dimensional model generated by the computing module, and displays the first three-dimensional model in real time. The three-dimensional scanning system provided by the present disclosure can generate the first three-dimensional model corresponding to at least a part of the object during the scanning process of the object, that is, scanning the object and the calculation of the three-dimensional reconstruction can be performed simultaneously, and the first three-dimensional model can also be displayed in real time, so as to facilitate a subsequent adjustment of a scanning situation according to the displayed first three-dimensional model. The operation is relatively flexible and can be applied to relatively complex application scenarios.

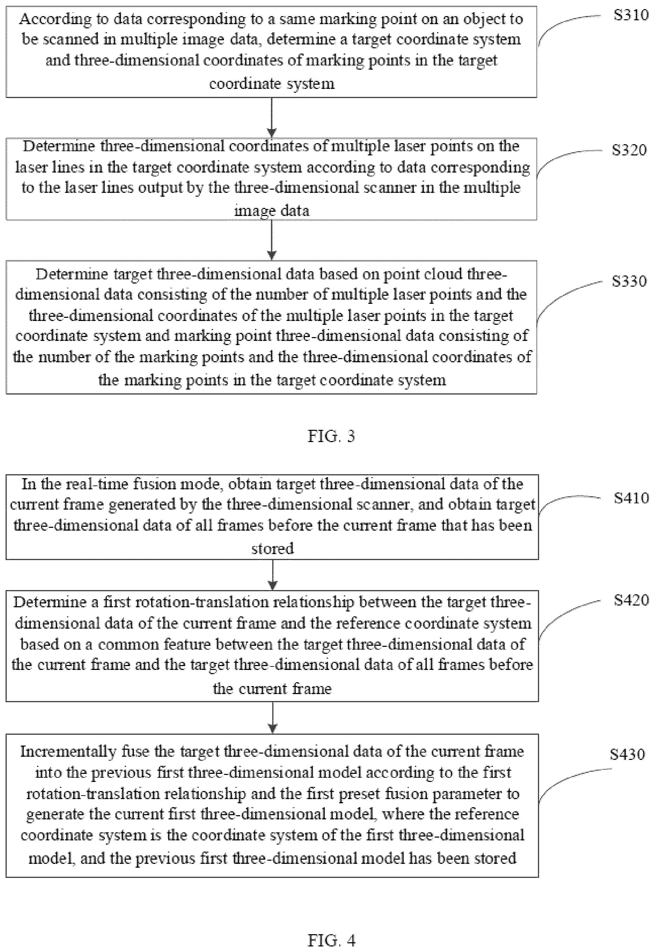

FIG. 3 is a flow chart of a method for generating three-dimensional data provided by an embodiment of the present disclosure, which illustrates a process in which the three-dimensional scanner in the three-dimensional scanning system generates the target three-dimensional data by performing the calculation of the three-dimensional reconstruction based on scanned image data, specifically including following steps S310 to S330 as shown in FIG. 3:
S310, according to data corresponding to a same marking point on an object to be scanned in multiple image data, a target coordinate system and three-dimensional coordinates of marking points in the target coordinate system are determined.

It can be understood that after the image sensor in the three-dimensional scanning integrated component of the three-dimensional scanner generates the image data, taking an example of two image sensors each generating two image data, the target coordinate system is determined according to the data corresponding to the same marking point in the two image data. For example, the object to be scanned includes three marking points, and both image data include data corresponding to a first marking point. The target coordinate system is determined according to relevant data of the first marking point in the image data taken at different angles, that is, the marking point is used as a standard reference point, and then the three-dimensional coordinates of the first marking point in the target coordinate system are determined.

S320, three-dimensional coordinates of multiple laser points on the laser lines in the target coordinate system are determined according to data corresponding to the laser lines output by the three-dimensional scanner in the multiple image data.

It can be understood that, based on the above S310, each laser line output by the three-dimensional scanner is composed of multiple laser points. The three-dimensional coordinates of each laser point in the target coordinate system are determined according to the data corresponding to a same laser point in the multiple image data, and all laser points are integrated into the same coordinate system. That is, the three-dimensional coordinates of the same laser point included in the two image data in the target coordinate system are determined according to a difference in image imaging positions, which is convenient for a subsequent construction of the first three-dimensional model. If a certain laser point is included in one image data but not included in another image data, coordinates of the certain laser point cannot be accurately determined.

S330, target three-dimensional data is determined based on point cloud three-dimensional data consisting of the number of multiple laser points and the three-dimensional coordinates of the multiple laser points in the target coordinate system and marking point three-dimensional data consisting of the number of the marking points and the three-dimensional coordinates of the marking points in the target coordinate system.

It can be understood that on the basis of the above S320, the number of laser points and the number of marking points for determining the three-dimensional coordinates are obtained, the three-dimensional coordinates of the multiple laser points in the target coordinate system are integrated into a laser point set, and the three-dimensional coordinates of the marking points in the target coordinate system are integrated into a marking point set. Three-dimensional data is generated based on the point cloud three-dimensional data that is composed of the number of laser points and the three-dimensional coordinates of the multiple laser points in the target coordinate system and the marking point three-dimensional data that is composed of the number of marking points and the three-dimensional coordinates of the marking points in the target coordinate system. The three-dimensional data refers to data corresponding to one image frame collected by the multiple image sensors at the same time.

The disclosed embodiment provides the three-dimensional data generation method, which is the method for generating three-dimensional data by performing the calculation of the three-dimensional reconstruction based on the image data by the three-dimensional scanner, specifically including: obtaining multiple image data by scanning the object by multiple image sensors installed on the three-dimensional scanner, determining the target coordinate system according to data corresponding to at least one same marking point in the multiple image data, and determining the three-dimensional coordinates of the same marking point in the target coordinate system; after determining the target coordinate system, determining the three-dimensional coordinates of multiple laser points on the laser lines in the target coordinate system according to data corresponding to the laser lines output by the three-dimensional scanner in the multiple image data, that is, unify the multiple laser points into the same coordinate system; finally, obtaining the target three-dimensional data according to the number of multiple laser points, the three-dimensional coordinates of the multiple laser points in the target coordinate system, the number of marking points and the three-dimensional coordinates of the marking points in the target coordinate system, that is, the three-dimensional data is obtained after coordinates are unified, so as to facilitate fusing into point cloud three-dimensional data in the computing module, and at the same time, an amount of three-dimensional data transmitted is relatively small, which effectively reduces the transmission bandwidth and further speeds up the construction of the first three-dimensional model.

FIG. 4 is a flow chart of a method for generating a first three-dimensional model provided by an embodiment of the present disclosure. Optionally, target three-dimensional data generated by the three-dimensional scanner is obtained, and the calculation of the three-dimensional reconstruction is performed according to the target three-dimensional data to generate the first three-dimensional model. That is, after the computing module receives the target three-dimensional data transmitted by the three-dimensional scanner, the computing module generates the first three-dimensional model according to the target three-dimensional data. The flow chart specifically includes the following steps S1010 to S1040 as shown in FIG. 4:
It is understandable that after the computing module receives the target three-dimensional data, it needs to determine the target fusion mode based on the three-dimensional data according to a generation status of the current first three-dimensional model. The target fusion mode is a global fusion mode and/or a real-time fusion mode.

Optionally, the target three-dimensional data generated by the three-dimensional scanner is obtained, and the target three-dimensional data is stored in a pre-built database, where the database includes at least one three-dimensional data; whether the three-dimensional scanner has completed scanning the object to be scanned is determined, and if so, the target fusion mode is determined to be the global fusion mode; if not, the target fusion mode is determined to be the real-time fusion mode.

Optionally, the determining of whether the three-dimensional scanner has completed scanning the object to be scanned includes: if the computing module detects a trigger operation for a first mark, determining that the three-dimensional scanner has completed scanning the object to be scanned.

It is understandable that the computing module obtains the target three-dimensional data generated by the three-dimensional scanner and stores the target three-dimensional data in the pre-built database, which is used to store all the three-dimensional data generated by the three-dimensional scanner in the process of scanning the object to be scanned. The three-dimensional scanner scans the object in real time, and generates the corresponding target three-dimensional data each time one image frame is scanned. As a scanning progresses, the first three-dimensional model corresponding to the object becomes more and more perfect. At the same time, the user can view the entire first three-dimensional model on the display module. At this time, the three-dimensional scanner can be determined by viewing the first three-dimensional model displayed in the display module to determine whether the three-dimensional scanner has completed the scanning of the object to be scanned. If the user determines that the scanning of the object to be scanned is completed, the first mark (a confirmation mark) in the display module can be triggered, or a confirmation button configured on the display module can be pressed to obtain a confirmation signal. If the computing module detects or receives the confirmation signal, the computing module determines that the three-dimensional scanner has completed the scanning of the object to be scanned, and the target fusion mode is determined to be the global fusion mode. Otherwise, the computing module determines that the three-dimensional scanner has not completed the scanning of the object to be scanned, and the target fusion mode is determined to be the real-time fusion mode.

It is understandable that there are two modes for the computing module to generate the first three-dimensional model: the first mode is to directly perform the calculation of the three-dimensional reconstruction to generate at least part of the first three-dimensional model after obtaining the target three-dimensional data corresponding to the single image frame, that is, the real-time fusion mode, and the second mode is to obtain all three-dimensional data and then perform the calculation of the three-dimensional reconstruction to generate a complete first three-dimensional model, that is, the global fusion mode. It is understandable that a first case specifically includes the following steps S1010 to S1030:
S1010, in the real-time fusion mode, target three-dimensional data of the current frame generated by the three-dimensional scanner is obtained, and target three-dimensional data of all frames before the current frame that has been stored is obtained.
S1020, a first rotation-translation relationship between the target three-dimensional data of the current frame and the reference coordinate system is determined based on a common feature between the target three-dimensional data of the current frame and the target three-dimensional data of all frames before the current frame.
S1030, the target three-dimensional data of the current frame is incrementally fused into the previous first three-dimensional model according to the first rotation-translation relationship and the first preset fusion parameter to generate the current first three-dimensional model, where the reference coordinate system is the coordinate system of the first three-dimensional model, and the previous first three-dimensional model has been stored.

Optionally, in the global fusion mode, target three-dimensional data of all frames generated by the three-dimensional scanner are acquired; the second rotation-translation relationship between the target three-dimensional data of all frames and the reference coordinate system is determined based on the common feature in the target three-dimensional data of all frames; all stored frame target three-dimensional data are fused according to the second rotation-translation relationship and the first preset fusion parameter to generate the first three-dimensional model, where the reference coordinate system is the coordinate system in which the first three-dimensional model is located, and the first preset fusion parameter includes a first point distance.

It can be understood that in the real-time fusion mode, the computing module obtains the target three-dimensional data of the current frame generated by the three-dimensional scanner and the stored target three-dimensional data of all frames before the current frame, and calculates the first rotation-translation relationship based on the data corresponding to the same marking point (common feature) included in the target three-dimensional data of the current frame generated by the three-dimensional scanner and the stored target three-dimensional data of all frames before the current frame and the reference coordinate system until the scan is completed. For example, the three-dimensional scanner generates 10 three-dimensional data after completing the scan. After the generation, the 10 three-dimensional data are sent to the computing module in sequence. Each time the computing module receives the three-dimensional data, it constructs a first three-dimensional model based on incremental data of the received target three-dimensional data of the current frame compared to the target three-dimensional data of all frames before the current frame, until the entire first three-dimensional model corresponding to the object to be scanned is generated based on the 10 three-dimensional data. In this case, it can be determined that the scan is completed. A second case can be understood as, after the three-dimensional scanner completes scanning the object to be scanned, the computing module calculates an amount of rotation and an amount of translation between the three-dimensional data corresponding to each two adjacent image frames according to the common feature (marking point) of all stored three-dimensional data and the reference coordinate system through a posture difference. The reference coordinate system is the coordinate system where the first three-dimensional model is located. Then, the second rotation-translation relationship is obtained according to the amount of rotation and the amount of translation. The rotation-translation relationship can be understood as a rotation-rotation-translation relationship. The three-dimensional data corresponding to each two adjacent image frames include at least one same marking point. For example, after the three-dimensional scanner completes scanning, a total of 10 three-dimensional data are generated. A rotation-translation relationship between second three-dimensional data and first three-dimensional data and a rotation-translation relationship between the second three-dimensional data and the third three-dimensional data are calculated, and so on, until the 10 three-dimensional data are traversed. The computing module calculates the second rotation-translation relationship according to the marking points based on the 10 three-dimensional data, so as to facilitate the subsequent fusion of the data corresponding to all laser lines to obtain the optimized point cloud three-dimensional data, so that positions of the laser points in the obtained point cloud three-dimensional data are more accurate, and a precision and an effect of the obtained first three-dimensional model are better.

It is understandable that after the scanning of the object is completed, in the global fusion mode, the data corresponding to the laser lines in all the three-dimensional data in the database are directly fused according to the second rotation-translation relationship that has been calculated and the first preset fusion parameter to obtain optimized first global point cloud three-dimensional data, that is, a large point distance with full point cloud fusion optimization is performed, and the first point distance in the first preset fusion parameter can be greater than or equal to 0.3mm. Alternatively, if the scanning of the object is not completed, that is, in the real-time fusion mode, the fusion is performed according to the first rotation-translation relationship determined by two adjacent three-dimensional data with the same marking point. For example, after 5 three-dimensional data have been fused and the second global point cloud three-dimensional data is generated, sixth three-dimensional data is immediately obtained, and the first rotation-translation relationship is calculated according to the sixth three-dimensional data and fifth three-dimensional data. The sixth three-dimensional data is fused into the above-mentioned global point cloud three-dimensional data (the second global point cloud three-dimensional data) through the first rotation-translation relationship and the first preset fusion parameter. It is understandable that each fusion is the data corresponding to the laser lines in the three-dimensional data. At this time, the second global point cloud three-dimensional data includes 6 fused three-dimensional data, that is, a single-frame large point distance with incremental fusion optimization is performed. It is understandable that the first point distance in the first preset fusion parameter involved in the global fusion mode and the first point distance in the first preset fusion parameter involved in the real-time fusion mode may be the same, and both use a large point distance of 0.3 mm or more for fusion.

Optionally, incremental data of the current first three-dimensional model is obtained, the incremental data is rendered, and the first three-dimensional model corresponding to the rendered incremental data is sent to the display module.

It is understandable that if the entire three-dimensional data is fused as a whole to generate the first global point cloud three-dimensional data, the first global point cloud three-dimensional data is rendered by the rendering module in the computing module to directly generate a complete first three-dimensional model corresponding to the object to be scanned, and the rendering module can be composed of an algorithm with a rendering function. Alternatively, if the three-dimensional data corresponding to a single image frame is fused into the second global point cloud three-dimensional data, the incremental data in the second global point cloud three-dimensional data is rendered, and the second global point cloud three-dimensional data before fusion has been rendered and the corresponding first three-dimensional model is generated, so only the incremental data in the fused second global point cloud three-dimensional data needs to be rendered, and then the first three-dimensional model corresponding to the fused second global point cloud three-dimensional data is displayed to realize the function of the real-time display of the first three-dimensional model, so that the user can understand the scanning process. For example, at time T, the first three-dimensional model displayed by the display module only includes a model A, and at time T+1, the incremental data is rendered to obtain a model B, and the model B is fused into the model A to obtain the first three-dimensional model to be displayed at that time, and the display module directly displays the fused first three-dimensional model at that time.

The embodiment of the present disclosure provides the method for generating the first three-dimensional model. The first three-dimensional model displayed by the display module can determine whether the three-dimensional scanner has completed scanning the object to be scanned. If the scanning is completed, that is, in the global fusion mode, the computing component calculates the second rotation-translation relationship according to all the acquired three-dimensional data, and fuses all the three-dimensional data in the database according to the second rotation-translation relationship and the first preset fusion parameter to generate the first global point cloud three-dimensional data, and then renders the first global point cloud three-dimensional data to obtain an overall first three-dimensional model. If the scanning is not completed, that is, in the real-time fusion mode, the first rotation-translation relationship is calculated according to target three-dimensional data of a historical frame and the target three-dimensional data of the current frame, and the target three-dimensional data is fused into the previously generated second global point cloud three-dimensional data according to the first rotation-translation relationship and the first preset fusion parameter, that is, the second global point cloud three-dimensional data is updated, and then the incremental data in the updated second global point cloud three-dimensional data is rendered to generate the first three-dimensional model. At this time, the first three-dimensional model may not be a complete first three-dimensional model. The method provided by the present disclosure can display at least part of the first three-dimensional model corresponding to the object in real time in the display module during the scanning process, so as to facilitate the subsequent adjustment of the scanning method and avoid scanning errors.

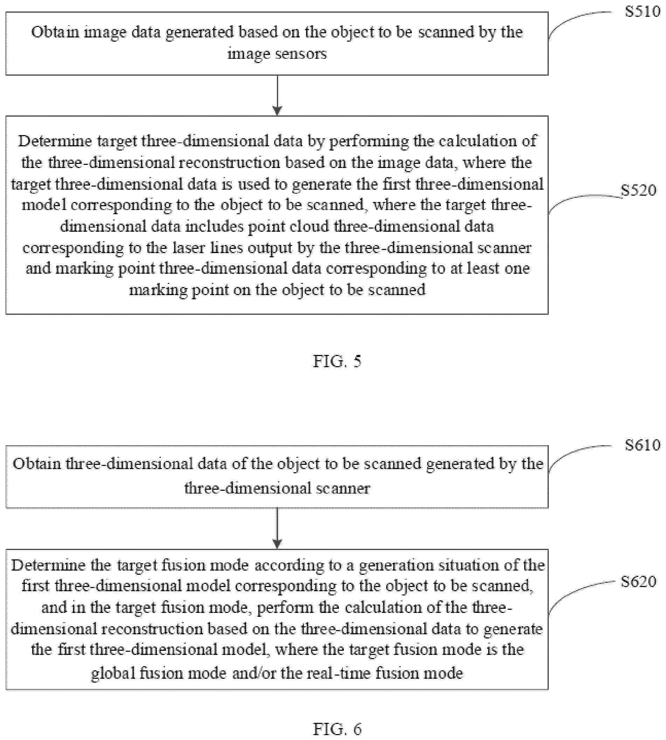

FIG. 5 is a flow chart of a three-dimensional scanning method provided by an embodiment of the present disclosure, which is applied to a three-dimensional scanner, that is, a process of scanning images to generate three-dimensional data by the three-dimensional scanner, and specifically includes the following steps S510 to S520 as shown in FIG. 5:
S510, image data generated based on the object to be scanned by the image sensors is obtained.

It is understandable that before using the three-dimensional scanner for scanning, at least one marking point is pasted on the object to be scanned. The marking point can be a point that is eye-catching and easy to be detected and identified, such as a black dot. After the marking point is set, taking the three-dimensional scanner being a laser scanner as an example, the three-dimensional scanning integrated component includes multiple image sensors and multiple laser devices. The image sensors are used to generate the image data based on the object to be scanned. The laser devices are used to emit laser lines to the object to be scanned. The laser devices can be laser projectors. When the laser three-dimensional scanner scans the object, the laser projectors of the laser three-dimensional scanner project laser lines to the object and camera devices (image sensors) of the three-dimensional scanner synchronously capture images of the surface of the object covered with laser lines. The image data includes features of the laser lines and features of marking points. For example, the three-dimensional scanner includes two camera devices on each side. The two camera devices simultaneously shoot the object and generate two image data. The two image data can be understood as two data corresponding to one image frame. The three-dimensional data obtained from the two image data can be recorded as the three-dimensional data corresponding to the one image frame. Each image data includes multiple laser lines and at least one marking point. Both image data include at least one identical marking point and multiple identical laser lines.

S520, target three-dimensional data is determined by performing the calculation of the three-dimensional reconstruction based on the image data, where the target three-dimensional data is used to generate the first three-dimensional model corresponding to the object to be scanned, where the target three-dimensional data includes point cloud three-dimensional data corresponding to the laser lines output by the three-dimensional scanner and marking point three-dimensional data corresponding to at least one marking point on the object to be scanned.

It can be understood that, based on the above S510, the central processing unit in the three-dimensional scanner determines the target three-dimensional data according to the data corresponding to the laser lines and the data corresponding to the marking point in the two generated image data, and the target three-dimensional data includes the point cloud three-dimensional data corresponding to the laser lines and the marking point three-dimensional data corresponding to the marking point, that is, an extraction of laser lines and a reconstruction of the marking point are performed. The target three-dimensional data includes the three-dimensional coordinates of multiple laser points on the laser lines, the number of laser points, and the three-dimensional coordinates of the marking points, and the number of marking points. The three-dimensional coordinates of the multiple laser points and the three-dimensional coordinates of the marking points are in the same coordinate system.

Optionally, the calculation of the three-dimensional reconstruction is performed based on the image data to determine the target three-dimensional data, and the target three-dimensional data is used to generate the first three-dimensional model corresponding to the object to be scanned, specifically including: determining the target coordinate system and the three-dimensional coordinates of the marking points in the target coordinate system based on data corresponding to the same marking point on the object to be scanned in multiple image data; determining the three-dimensional coordinates of multiple laser points on the laser lines in the target coordinate system based on data corresponding to the laser lines output by the three-dimensional scanner in multiple image data; and obtaining the target three-dimensional data based on the number of multiple laser points, the three-dimensional coordinates of the multiple laser points in the target coordinate system, the number of marking points, and the three-dimensional coordinates of the marking points in the target coordinate system.

Optionally, after the three-dimensional scanner generates the target three-dimensional data, the target three-dimensional data is sent to the portable device. The portable device includes the computing module and the display module. The computing module is used to obtain the target three-dimensional data generated by the three-dimensional scanner, and perform the calculation of three-dimensional reconstruction according to the target three-dimensional data to generate the first three-dimensional model; the display module is used to display the first three-dimensional model generated by the computing module.

It is understandable that the process of the computing module in the personal computer performing the calculation of the three-dimensional reconstruction to generate the first three-dimensional model according to the target three-dimensional data is as described above and will not be elaborated here.

The three-dimensional scanning method provided by the embodiment of the present disclosure is applied to the three-dimensional scanner. Multiple image sensors installed on the three-dimensional scanner simultaneously generate multiple image data based on the object to be scanned. Then, the central processing unit in the three-dimensional scanner determines the target three-dimensional data based on the image data. The target three-dimensional data includes point cloud three-dimensional data corresponding to the laser lines output by the three-dimensional scanner and marking point three-dimensional data corresponding to at least one marking point on the object to be scanned. The three-dimensional scanner can convert the scanned image data into three-dimensional data by itself to reduce the data transmission bandwidth and increase the transmission speed, so as to facilitate the subsequent portable device to construct the first three-dimensional model based on the three-dimensional data.

On a basis of the above embodiment, FIG. 6 is a three-dimensional scanning method provided by an embodiment of the present disclosure, which is applied to a terminal. The method specifically includes the following steps S610 to S620 as shown in FIG. 6:
S610, three-dimensional data of the object to be scanned generated by the three-dimensional scanner is obtained.
S620, the target fusion mode is determined according to a generation situation of the first three-dimensional model corresponding to the object to be scanned, and in the target fusion mode, the calculation of the three-dimensional reconstruction is performed based on the three-dimensional data to generate the first three-dimensional model, where the target fusion mode is the global fusion mode and/or the real-time fusion mode.

It can be understood that the terminal includes the computing module and the display module. The terminal is the portable device 220 in FIG. 2, such as an iPad or other personal mobile terminal with computing capabilities. The computing module executes the above steps S610 to S620. The specific execution method refers to the execution method and execution steps related to the computing module 120 in the above three-dimensional scanning system, which are not described here. After the computing module generates the first three-dimensional model, the first three-dimensional model is sent to the display module, and the display module displays the first three-dimensional model in real time.

The present disclosure provides the three-dimensional scanning method, which can construct the first three-dimensional model according to the three-dimensional data received in real time, and display the three-dimensional data in real time on the screen of the terminal based on the display module. The scanning situation can be understood through the displayed first three-dimensional model. Secondly, the terminal is easy to write and carry, can be used in more complex scenarios, and can further improve the scanning precision.

At present, handheld limited three-dimensional scanners have been widely used in many industries. Most handheld limited three-dimensional scanners use computers and wired transmission. However, this working method is limited by cables for limited transmission and an influence of a length of the cable. It is not conducive to use in complex working environments. For example, issues regarding power supply need to be considered outdoors, and a protection of a scene needs to be considered at a criminal investigation scene. Therefore, in an existing working method, three-dimensional scanners and computers are not easy to carry, and cannot display scanning data in real time. They are highly dependent on AC power and have a poor user experience.

In response to the above technical problems, the embodiments of the present disclosure provide a mobile computing module for the three-dimensional scanner. The computing module 120 in the three-dimensional scanning system provided in the above embodiments may be the mobile computing module. The mobile computing module includes a communication component and a computing component. The mobile computing module is communicatively connected to the three-dimensional scanner via the communication component to obtain image data generated by the three-dimensional scanner; the computing component performs at least partial of a calculation of a three-dimensional reconstructions on the image data; the mobile computing module is communicatively connected to the display module via the communication component to send a calculation result of the computing component to the display module. The display module is used to display the three-dimensional model obtained based on the calculation result. This is described in detail below through one or more of the following embodiments.

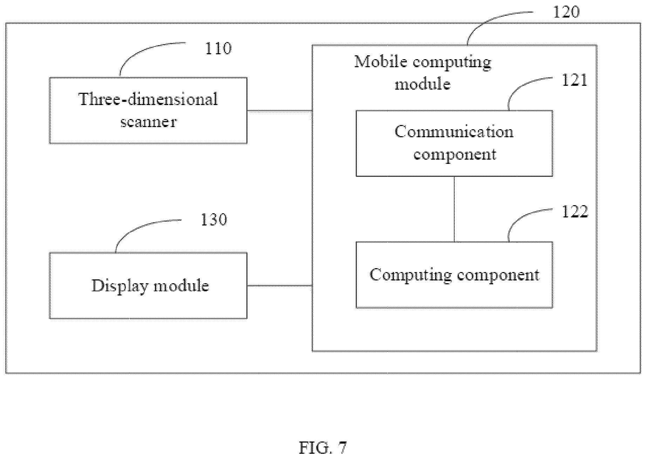

FIG. 7 is a schematic diagram of a structure of a three-dimensional scanning system provided by an embodiment of the present disclosure, which specifically includes the structure shown in FIG. 7. FIG. 7 includes a three-dimensional scanner 110 and a mobile computing module 120. The three-dimensional scanning system shown in FIG. 7 can be the same system as the three-dimensional scanning system shown in FIG. 1. The computing module 120 in FIG. 1 is the same as the mobile computing module 120 in FIG. 7, where the mobile computing module 120 includes a communication component 121 and a computing component 122. The mobile computing module 120 is connected to the three-dimensional scanner 110 through the communication component 121 to obtain image data generated by the three-dimensional scanner 110; the computing component 122 performs a calculation of at least partial three-dimensional reconstructions on the image data; the mobile computing module 120 is connected to a display module 130 through the communication component 121 to send a calculation result of the computing component 122 to the display module 130, and the display module 130 is used to display the three-dimensional model obtained based on the calculation result.

It is understandable that the mobile computing module 120 is configured on the three-dimensional scanner 110, and the three-dimensional scanner 110 and the mobile computing module 120 are connected by a wired communication, and can be connected by the wired communication via a Universal Serial Bus (USB), specifically a USB 3.0 wired connection. The communication component 121 includes a wired communication component. The three-dimensional scanner 110 transmits the image data that has been obtained by scanning to the mobile computing module 120 through the wired communication. The computing component 122 in the mobile computing module 120 performs the calculation of at least partial three-dimensional reconstruction on the image data. The computing component 122 can be a central processing unit, and the central processing unit preferably has graphics processing technology. A user can pre-select different working modes. The mobile computing module 120 corresponds to different calculation method of the three-dimensional reconstruction under different working modes. After determining the working mode, under the determined working mode, the computing component 122 can perform the corresponding calculation method of the three-dimensional reconstruction, the calculation component 122 obtains the calculation result corresponding to each working mode, and then sends the calculation result of the calculation component 122 to the display module 130, the calculation result includes the three-dimensional data corresponding to the different working modes, where the mobile computing module 120 is communicatively connected with the display module 130, the display module 130 can be a portable display screen, the display module 130 can be configured with a computing module, such as a tablet, of course, the display module 130 can also be a computer, the display module 130 is used to display the three-dimensional model obtained based on the calculation result, the three-dimensional model is a three-dimensional digital model corresponding to the object scanned by the three-dimensional scanner 110. In the disclosed embodiment of the present application, the mobile computing module 120 is communicatively connected to the display module 130 through the communication component 121. A communication connection method may be a wired communication connection and/or a wireless communication connection. The wired communication connection is performed through a universal serial bus, specifically a USB TYPE-C, and the wireless communication connection is performed through Wi-Fi or a hotspot, specifically Wi-Fi 6. The computing component 122 transmits the calculation result to the display module 130 through the wired communication or the wireless communication.

Optionally, the working mode of the computing component 122 includes a first working sub-mode, and the computing component 122 calculates the image data through the first working sub-mode to obtain a first calculation result.

It is understandable that the working mode of the computing component 122 includes the first working sub-mode. In the first working sub-mode, the computing component 122 performs a calculation of a partial three-dimensional reconstruction on the image data to obtain a first calculation result, which may be point cloud data.

Optionally, the computing component 122 calculates the image data through the first working sub-mode to obtain a first calculation result, including: the computing component 122 extracts feature data from the image data, and performs the three-dimensional reconstruction based on the feature data to obtain point cloud data, and the first calculation result includes the point cloud data.

It can be understood that specific calculation steps of the computing component 122 in the first working sub-mode include: the computing component 122 extracts feature data from the image data, the feature data refers to features such as marking points, speckles, laser lines and fringe phases, and the features are determined by a type of three-dimensional scanner used during scanning or a scanning mode of the three-dimensional scanner. The computing component 122 uses a corresponding feature extraction mode to extract features according to the type of the selected three-dimensional scanner or the scanning mode of the selected three-dimensional scanner. Then the computing component 122 performs the three-dimensional reconstruction based on the feature data to obtain the point cloud data. The first calculation result referred above includes point cloud data.

Optionally, the working mode of the calculation component 122 may further include a second working sub-mode, and the calculation component 122 performs a calculation on the first calculation result through the second working sub-mode to obtain a second calculation result.

It can be understood that the working mode of the computing component 122 can also include the second working sub-mode. After the first calculation result is obtained by calculating the image data through the first working sub-mode, the first calculation result is calculated through the second working sub-mode to obtain the second calculation result. Specifically, a calculation of a partial three-dimensional reconstruction is performed on the image data to obtain the first calculation result, which is point cloud data. Subsequently, further the calculation of the three-dimensional reconstruction is performed based on the first calculation result to obtain the second calculation result, which is the point cloud data that has been spliced. The second working sub-mode can be understood as further performing the calculation of the three-dimensional reconstruction on the basis of the first working sub-mode to obtain a more complete calculation of the three-dimensional reconstruction. It is understandable that the three-dimensional scanner 110 generates multiple image frames when scanning the object, and at least one image frame correspond to one image data, that is, each image frame may correspond to one image data, or multiple image frames may correspond to one image data, that is, multiple image data may be required to determine the three-dimensional model of the object. The first working sub-mode only calculates the point cloud data corresponding to each image data, but does not perform a fusion processing on multiple point cloud data. For example, when the three-dimensional scanner 110 scans object 1, it obtains 5 image data, and transmits the 5 image data to the computing component 122 respectively. The computing component 122 calculates the point cloud data corresponding to each of the 5 received image data in the first working sub-mode in turn. The point cloud data corresponding to each of the 5 image data can be understood as the first calculation result. After the point cloud data corresponding to each of the 5 image data has been calculated, the second working sub-mode splices and fuses the 5 point cloud data to obtain the point cloud data that has been spliced and fused.

Optionally, the computing component 122 performs a calculation on the first calculation result through the second working sub-mode to obtain the second calculation result, including: the computing component 122 splices and fuses the point cloud data obtained by performing the three-dimensional reconstruction based on the feature data, and the second calculation result includes the point cloud data that has been spliced and fused.

It should be noted that the computing component 122 is configured with the first working mode, which includes the first working sub-mode. The computing component 122 may also be configured with the second working mode, which includes the first working sub-mode and the second working sub-mode. The computing component 122 switches to select the first working mode or the second working mode. In the first working mode, the computing component 122 performs the calculation of the three-dimensional reconstruction on the image data through the first working sub-mode to obtain the first calculation result. In the second working mode, the computing component 122 performs the calculation of the three-dimensional reconstruction on the image data through the first working sub-mode to obtain the first calculation result, and performs the calculation of the three-dimensional reconstruction on the first calculation result through the second working sub-mode to obtain the second calculation result. The first working sub-mode is configured with multiple calculation modes corresponding to the scanner type and/or the scanning mode.

Optionally, the mobile computing module 120 includes a mode selection control 123, and the mobile computing module 120 sends the first calculation result and/or the second calculation result to the display module 130 in response to a triggering operation of the mode selection control 123.

It is understandable that the mobile computing module 120 may also include a display screen that is relatively small, on which basic information of the mobile computing module 120, such as the mode selection control 123, a wireless network communication technology (Wi-Fi), and a power level, may be displayed. Alternatively, the mode selection control 123 may be provided in a form of a button on the mobile computing module 120, and a current working mode of the computing component 122 may be determined by means of the button. After the current working mode is determined according to the mode selection control 123, the current working mode may also be displayed on the display screen, such as displaying words "first working sub-mode" or "second working sub-mode". Specifically, the mobile computing module 120 responds to the triggering operation of the mode selection control 123, that is, the user triggers the mode selection control 123 through the display screen and then determines the current working mode. Then, the mobile computing module 120 sends the first calculation result and/or the second calculation result obtained in the current working mode to the display module 130 for display in real-time, that is, the display module 130 can display the first calculation result without splicing and fusion, or display the second calculation result after splicing and fusion, or display the first calculation result and the second calculation result at the same time, and the display module 130 can adjust the three-dimensional model obtained based on the first calculation result or the second calculation result by a touch sliding.

Of course, when the display module 130 is a tablet or a computer with a processor, a setting of the display screen on the mobile computing module 120 can be cancelled, or the mode selection control 123 can be set on the display module 130.

In the disclosed embodiment, the mobile computing module 120 is connected to a portable display screen without a computing capability by a wired communication. After the mobile computing module 120 selects the second working mode, the second calculation result is transmitted to the portable display screen for a real-time display through a TYPE-C (DP ALTMODE) video transmission technology. The mobile computing module 120 is connected to a tablet (or a computer) by a wireless or wired communication. The mobile computing module 120 preferentially selects the first working mode to send the first calculation result to the tablet. The tablet calculates the first calculation result through the second working sub-mode, obtains the second calculation result and displays it in real time. A reconstruction calculation of the image data is distributed at both ends of the mobile computing module 120 and the tablet (or the computer), which can improve an efficiency and a stability of data processing and ensure a real-time display effect. When the mobile computing module 120 is used with the portable display screen for scanning with the three-dimensional scanner, it can solve the problem of being limited by the cable and the length of the cable, which is not conducive to some complex working environments, such as the outdoor (problem of power supply), the criminal investigation scene (protection of physical evidence), etc.

Optionally, the communication component 121 includes a wireless communication component, and the mobile computing module 120 transmits the calculation result to the display module 130 in real time through the wireless communication component.

Optionally, the mobile computing module 120 also includes an interface that can be configured to connect to a storage medium such as a solid state disk (or solid state drive, SSD), a secure digital card (secure digital memory card/SD card), etc. The mobile computing module 120 can store the image data, the first calculation result and the second calculation result in the configured storage medium. After the scan is completed, the data in the storage medium can be transmitted to other terminal devices. The other terminal devices can be personal computers (PC). A detailed calculation of the three-dimensional reconstructions is performed on the personal computer to improve data security and availability, and also facilitate an analysis and a calculation of data obtained at different stages.

Optionally, the mobile computing module 120 further includes a power supply component, and the power supply component is used to supply power to the mobile computing module 120 and the three-dimensional scanner 110.

It is understandable that the mobile computing module 120 also includes the power supply component, which can be a lithium battery. The mobile computing module 120 is equipped with a heat dissipation charger with a power transmission protocol, which can be a TYPE-C PD charger. The mobile computing module 120 can be charged through a small PD gallium nitride adapter. The power supply component (lithium battery) is used to power the mobile computing module 120 and the three-dimensional scanner 110.

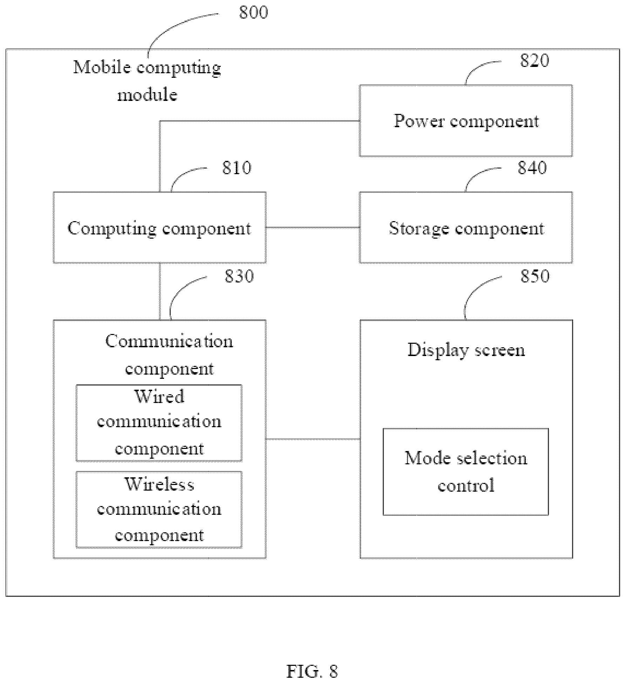

For example, see FIG. 8, which is a schematic diagram of the structure of another mobile computing module for the three-dimensional scanner provided by an embodiment of the present disclosure. FIG. 8 includes a mobile computing module 800, and the mobile computing module 800 includes a computing component 810, a power component 820, a communication component 830, a storage component 840 and a display screen 850. The communication component 230 is connected to the computing component 810, the display screen 850 and the storage component 840 respectively. Specifically, the power component 820 includes a power management component and a lithium battery, and the power management component is used to control a charging of the lithium battery; the computing component 810 can be a digital product development system (next generation, NX); the display screen 850 and the computing component 810 are connected through the communication component 830, and the display screen 850 includes a mode selection control, which can be triggered in the display screen 850 to determine the working mode. The display screen 850 can be an organic light-emitting laser display (organic light-emitting diode, OLED), a size of the display screen 850 can be 0.96 inches; the mobile computing module 800 can be connected to the display module 130 through a driver, and the display module 130 can also be an organic electro-optical laser display, specifically a 5.5 to 8-inch OLED; the mobile computing module 800 can also be connected to the storage component 840 through the communication component 830, and the communication component 830 includes a wired communication component and a wireless communication component, and specifically, a USB flash drive can be connected through a wired communication component USB 3.0; a secure digital input and output (SDIO) of the digital product development system is connected to the SD card in the storage component 840, and the secure digital input and output is also an external device interface, and can also be connected to a SSD and the Wi-Fi 6 through a high-speed serial computer expansion bus standard (a peripheral component interconnect express,{HYPERLINK "https://baike.baidu.com/item/PCI-Express" \t "https://baike.baidu.com/item/_blank"}) of the digital product development system, and the Wi-Fi 6 is the wireless communication component in the communication component 830; the mobile computing module 800 also includes a microcontroller unit (MCU), which is used to control power on/off and reset operations of the mobile computing module 800. The mobile computing module 800 also includes a plurality of light-emitting diodes ({HYPERLINK "https://baike.baidu.com/item/LED/956234" \t "https://baike.baidu.com/item/_blank"}) for providing lighting and indication. The mobile computing module 800 also includes an inertial measurement unit (IMU) for detecting and measuring an acceleration and a rotational motion of the mobile computing module 800.

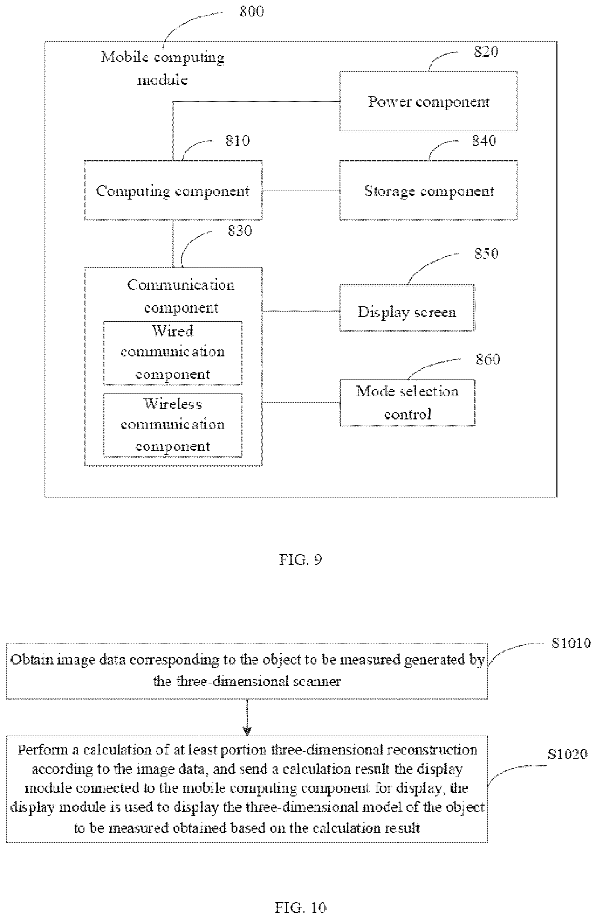

For example, see FIG. 9, which is a schematic diagram of a structure of another mobile computing module for the three-dimensional scanner provided in an embodiment of the present disclosure. The schematic diagram of the structure of the mobile computing module shown in FIG. 9 and the schematic diagram of the structure of the mobile computing module shown in FIG. 8 are the same except that the position of the mode selection control in the mobile computing module is different, and they are not elaborated here. A mode selection module 860 in FIG. 9 can also be configured in a form of a button on a mobile computing module 800, and the working mode can be determined by pressing the mode selection module 860 on the mobile computing module 800. After the working mode is determined, the current working mode can also be displayed on a display screen 850.

An embodiment of the present disclosure provides the mobile computing module for the three-dimensional scanner, where the mobile computing module includes a communication component and a computing component. The mobile computing module is connected to the three-dimensional scanner through the communication component to obtain image data generated by the three-dimensional scanner; the computing component performs a calculation of at least partial three-dimensional reconstruction on the image data; the mobile computing module is connected to the display module through the communication component to send the calculation result of the computing component to the display module, and the display module is used to display the three-dimensional model obtained based on the calculation result. The mobile computing module provided by the present disclosure is suitable for the three-dimensional scanner. When the three-dimensional scanner is used, the mobile computing module can be configured with the mobile computing module, which is easy to carry and has a simple implementation method. It is not affected by limited transmission cables and the length of the cable, and can be used in complex working environments, and can also display scanned data in real time, thereby improving the user experience.

On the basis of the above embodiment, FIG. 10 is a flow chart of a three-dimensional scanning method provided in an embodiment of the present disclosure. The three-dimensional scanning method is applied to the mobile computing module 120. The three-dimensional scanning method specifically includes steps S1010 to S1020 as shown in FIG. 10:
S1010, image data corresponding to the object to be measured generated by the three-dimensional scanner is obtained.

It is understandable that the mobile computing module obtains the image data generated by the three-dimensional scanner in the process of scanning the object to be measured. The image data may be image data corresponding to each image frame obtained by scanning, or may be image data corresponding to multiple image frames.

S1020, a calculation of at least portion three-dimensional reconstruction is performed according to the image data, and a calculation result is sent to the display module connected to the mobile computing component for display, where the display module is used to display the three-dimensional model of the object to be measured obtained based on the calculation result.

It can be understood that, based on the above S1010, the computing component in the mobile computing module performs the calculation of the at least partial three-dimensional reconstruction on the image data. The user can select different working modes in the mobile computing module in advance. Different working modes correspond to different calculation methods of the three-dimensional reconstruction. After determining the working mode, the computing component can perform the calculation of the partial three-dimensional reconstruction or complete the calculation of the three-dimensional reconstruction in the determined working mode. Alternatively, the computing component calculates the three-dimensional data corresponding to each working mode respectively, and after obtaining the three-dimensional data after performing the three-dimensional reconstruction on the image data, the working mode and the three-dimensional data corresponding to the working mode are determined, and then the calculation result of the computing component is sent to the display module. The calculation result can be understood as the three-dimensional data corresponding to different working modes, where the mobile computing module is communicatively connected to the display module through the communication component, and the display module can be understood as the portable display screen. The display module is used to display the three-dimensional model obtained based on the calculation result, and the three-dimensional model is the three-dimensional model corresponding to the object to be measured scanned by the three-dimensional scanner.

Optionally, the mobile computing module working mode includes a first working sub-mode and a second working sub-mode.

It is understandable that the working mode of the computing component includes a first working sub-mode and a second working sub-mode. The working mode can be predetermined. The calculation process of different working modes can be referred to the above embodiments and will not be described in detail here.

Optionally, the calculation of at least partial three-dimensional reconstruction is performed based on the image data, including: if the working mode is the first working sub-mode, feature data in the image data is extracted, and point cloud data is obtained by performing the three-dimensional reconstruction based on the feature data; if the working mode is the second working sub-mode, feature data in the image data is extracted, and point cloud data obtained by performing the three-dimensional reconstruction based on the feature data is fused.

It is understandable that the specific calculation steps of the computing component in the first working sub-mode refer to the above embodiment and will not be repeated here. It is understandable that after the computing component calculates the point cloud data, the point cloud data can be directly sent to other terminal devices. The other terminal devices can be the personal computers mentioned above, that is, an operator of the three-dimensional scanner can only be responsible for a real-time collection of image data on site, and then process the point cloud data after all the scans are completed. Specifically, the computing component can transmit the point cloud data to other terminal devices through the wireless communication component in the communication component. The wireless communication component can specifically be the sixth-generation wireless network technology; after other terminal devices receive the point cloud data, they splice and fuse the point cloud data to obtain a three-dimensional model, which can be directly displayed on other terminal devices, or the display module receives the three-dimensional model transmitted by other terminal devices and displays it.

It is understandable that the calculation method of the computing component in the second working sub-mode specifically includes: the computing component extracts feature data from the image data, specifically, it can extract features such as marking points, speckles, laser lines and fringe phases in the image data to obtain the feature data, and then the computing component performs the three-dimensional reconstruction based on the feature data to obtain point cloud data, and the first calculation result involved above includes the point cloud data. Subsequently, the computing component splices and fuses the point cloud data obtained by performing the three-dimensional reconstruction based on the feature data, and the second calculation result includes the point cloud data that has been spliced and fused. After the computing component obtains the point cloud data that has been spliced and fused, it can directly transmit the point cloud data that has been spliced and fused to the display module for a real-time display, where the point cloud data that has been spliced and fused can be understood as three-dimensional data. By realizing the display of the three-dimensional data, it is convenient to determine whether the scanned data is accurate. If there is a difference between the three-dimensional model and the object, that is, the scanned data may be inaccurate, the scanning method can be adjusted in time at the scanning site.

The three-dimensional scanning method provided by the embodiment of the present disclosure obtains image data corresponding to the object to be measured generated by the three-dimensional scanner, performs the calculation of at least partial three-dimensional reconstruction based on the image data, and sends the calculation result to the display module connected to the mobile computing component for display. The display module is used to display the three-dimensional model of the object to be measured obtained based on the calculation result. In the process of scanning using the three-dimensional scanner, the calculation of at least partial three-dimensional reconstruction can be performed based on the image data transmitted in real time, and the three-dimensional data corresponding to the calculation result can also be displayed in real time. By realizing the method of displaying the three-dimensional data, it is convenient to determine whether the scanned data is accurate. If there is a difference between the three-dimensional data and the object to be measured, that is, the scanned data may be inaccurate, the scanning method can be adjusted in time at the scanning site to avoid inaccurate scanning data obtained during subsequent fine calculations, thereby improving the user experience.

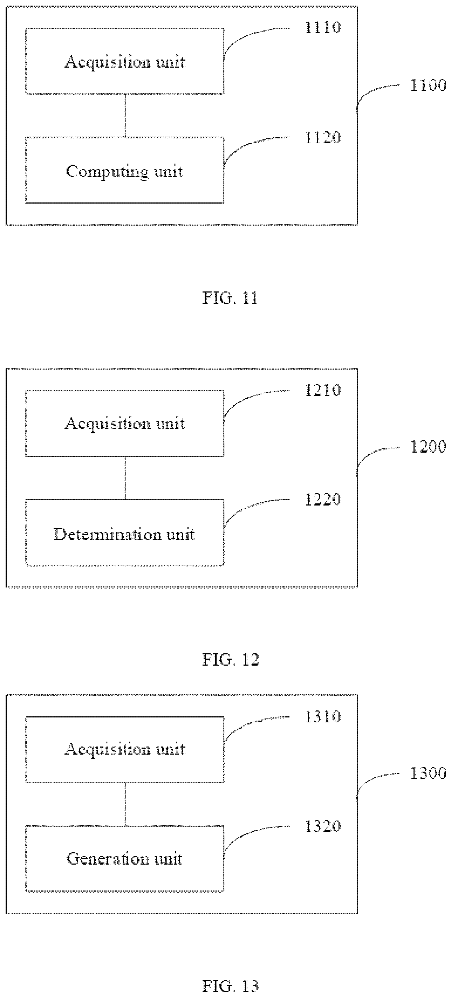

FIG. 11 is a schematic diagram of a structure of a three-dimensional scanning apparatus provided in an embodiment of the present disclosure. The three-dimensional scanning apparatus provided in the embodiment of the present disclosure can execute the processing processes provided in the above three-dimensional scanning method embodiment. As shown in FIG. 11, the three-dimensional scanning apparatus 1100 includes:
An acquisition unit 1110 is used to acquire image data corresponding to the object to be measured generated by the three-dimensional scanner;
A computing unit 1120 is used to perform the calculation of at least partial three-dimensional reconstruction based on the image data, and send the calculation result to the display module connected to the mobile computing component for display. The display module is used to display the three-dimensional model of the object to be measured obtained based on the calculation result.

Optionally, the working mode of the mobile computing module in the apparatus 1100 includes the first working sub-mode and the second working sub-mode.

Optionally, the computing unit 1120 performs the calculation of at least partial three-dimensional reconstruction according to the image data, specifically for:
Extracting feature data from the image data, and obtaining point cloud data by performing the three-dimensional reconstruction based on the feature data; and/or
Extracting feature data from the image data, and obtaining point cloud data by performing the three-dimensional reconstruction based on the feature data, and fusing the point cloud data.

The three-dimensional scanning apparatus of the embodiment shown in FIG. 11 can be used to execute the technical solution of the above-mentioned method embodiment. Its implementation principle and technical effect are similar and will not be described in detail here.

FIG. 12 is a schematic diagram of a structure of a three-dimensional scanning apparatus provided by an embodiment of the present disclosure. The three-dimensional scanning apparatus provided by the embodiment of the present disclosure can execute the processing processes provided by the embodiments of the three-dimensional scanning method. As shown in FIG. 12, the three-dimensional scanning apparatus 1200 includes:
An acquisition unit 1210 is used to acquire image data generated by the image sensors based on the object to be scanned;
A determination unit 1220 is used to perform the calculation of the three-dimensional reconstruction based on the image data to determine the target three-dimensional data, and the target three-dimensional data is used to generate the first three-dimensional model corresponding to the object to be scanned, where the target three-dimensional data includes point cloud three-dimensional data corresponding to the laser lines output by the three-dimensional scanner and marking point three-dimensional data corresponding to at least one marking point on the object to be scanned.

Optionally, the determination unit 1220 performs the calculation of the three-dimensional reconstruction according to the image data to determine target three-dimensional data, where the target three-dimensional data includes point cloud three-dimensional data corresponding to the laser lines output by the three-dimensional scanner and marking point three-dimensional data corresponding to at least one marking point on the object to be scanned, specifically for:
Determining the target coordinate system and the three-dimensional coordinates of the marking points in the target coordinate system according to the data corresponding to the same marking point on the object to be scanned in the multiple image data;
Determining the three-dimensional coordinates of multiple laser points on the laser lines in the target coordinate system according to the data corresponding to the laser lines output by the three-dimensional scanner in the multiple image data;
Obtaining the target three-dimensional data based on the point cloud three-dimensional data composed of the number of multiple laser points and the three-dimensional coordinates of the multiple laser points in the target coordinate system and the marking point three-dimensional coordinates composed of the number of marking points and the three-dimensional coordinates of the marking points in the target coordinate system.

Optionally, the apparatus 1200 also includes a sending unit, which is used to send the three-dimensional scanning data to the portable device after the three-dimensional scanner generates the three-dimensional data. The portable device includes a computing module and a display module. The computing module is used to obtain the three-dimensional data generated by the three-dimensional scanner, and perform the calculation of the three-dimensional reconstruction based on the three-dimensional data to generate the first three-dimensional model; the display module is used to display the first three-dimensional model generated by the computing module.

The three-dimensional scanning apparatus of the embodiment shown in FIG. 12 can be used to execute the technical solution of the above-mentioned method embodiment. Its implementation principle and technical effect are similar and will not be described in detail here.

FIG. 13 is a schematic diagram of a structure of a three-dimensional scanning apparatus provided by an embodiment of the present disclosure. The three-dimensional scanning apparatus provided by the embodiment of the present disclosure can execute the processing processes provided by the embodiment of the three-dimensional scanning method. As shown in FIG. 13, the three-dimensional scanning apparatus 1300 includes:
An acquisition unit 1310 is used to acquire three-dimensional data of the object to be scanned generated by the three-dimensional scanner;
A generation unit 1320 is used to determine the target fusion mode according to the generation situation of the first three-dimensional model corresponding to the object to be scanned, and in the target fusion mode, perform the calculation of the three-dimensional reconstruction based on the three-dimensional data to generate the first three-dimensional model, where the target fusion mode includes the global fusion mode and/or the real-time fusion mode.

The three-dimensional scanning apparatus of the embodiment shown in FIG. 13 can be used to execute the technical solution of the above-mentioned method embodiment. Its implementation principle and technical effect are similar and will not be described in detail here.

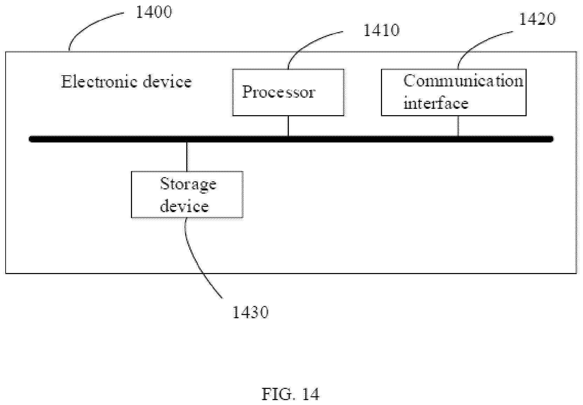

FIG. 14 is a schematic diagram of a structure of an electronic device provided in an embodiment of the present disclosure. The electronic device provided in the embodiment of the present disclosure can execute the processing processes provided in the above embodiment. As shown in FIG. 14, the electronic device 1400 includes: a processor 1410, a communication interface 1420, and a storage device 1430; where the computer program is stored in the storage device 1430 and is configured so that the processor 1410 executes the above-mentioned three-dimensional scanning methods.

In addition, the embodiment of the present disclosure further provides a computer-readable storage medium on which a computer program is stored. The computer program is executed by the processor to implement the three-dimensional scanning methods described in the above embodiment.

In addition, the embodiment of the present disclosure further provides a computer program product, which includes a computer program or instructions, and when the computer program or instructions are executed by the processor, the three-dimensional scanning methods as described above are implemented.

It should be noted that, in this article, relational terms such as "first" and "second" are only used to distinguish one entity or operation from another entity or operation, and do not necessarily require or imply any such actual relationship or order between these entities or operations. Moreover, the terms "include", "comprise" or any other variants thereof are intended to cover a non-exclusive inclusion, so that a process, a method, an article or a device including a series of elements includes not only those elements, but also other elements not explicitly listed, or also includes elements inherent to such process, method, article or device. In the absence of further restrictions, the elements defined by the sentence "comprise a..." do not exclude an existence of other identical elements in the process, method, article or device including the elements.

The above description is only a specific embodiment of the present disclosure, so that those skilled in the art can understand or implement the present disclosure. Various modifications to these embodiments will be apparent to those skilled in the art, and general principles defined herein can be implemented in other embodiments without departing from the spirit or scope of the present disclosure. Therefore, the present disclosure will not be limited to the embodiments shown herein, but will conform to a widest scope consistent with the principles and novel features disclosed herein.

### Industrial Applicability

The three-dimensional scanning system disclosed in the present disclosure can generate scanning data corresponding to the object during the scanning process by configuring the computing module on the three-dimensional scanner, so that the three-dimensional scanner has scanning and reconstruction computing capabilities, and the implementation method is simple and not affected by limited transmission cables and the length of the cable. The scanning data can also be displayed in real time, which is convenient for subsequent adjustment of the scanning situation according to the displayed data. The operation is relatively flexible, and it can be used in complex working environments, and it has strong industrial practicality.

## Claims

1. A three-dimensional scanning system, comprising a three-dimensional scanner, a computing module, and a display module; the three-dimensional scanner generating image data based on image sensors, and performing a calculation of a three-dimensional reconstruction based on the image data to determine target three-dimensional data; the computing module being communicatively connected to the three-dimensional scanner to obtain the target three-dimensional data generated by the three-dimensional scanner, and perform the calculation of the three-dimensional reconstruction according to the target three-dimensional data to generate a first three-dimensional model; the display module being communicatively connected to the computing module to obtain the first three-dimensional model generated by the computing module, and display the first three-dimensional model in real time.

2. The system according to claim 1, wherein obtaining the target three-dimensional data generated by the three-dimensional scanner, and performing the calculation of the three-dimensional reconstruction according to the target three-dimensional data to generate the first three-dimensional model comprises:
in a real-time fusion mode, obtaining target three-dimensional data of a current frame generated by the three-dimensional scanner, and obtaining target three-dimensional data of all frames before the current frame that has been stored;
determining a first rotation-translation relationship between the target three-dimensional data of the current frame and a reference coordinate system based on a common feature between the target three-dimensional data of the current frame and the target three-dimensional data of all frames before the current frame;
incrementally fusing, according to the first rotation-translation relationship and a first preset fusion parameter, the target three-dimensional data of the current frame into a previous first three-dimensional model that has been stored to generate a current first three-dimensional model, and the reference coordinate system being a coordinate system in which the first three-dimensional model is located.

3. The system according to claim 1, wherein obtaining the target three-dimensional data generated by the three-dimensional scanner, and performing the calculation of the three-dimensional reconstruction according to the target three-dimensional data to generate the first three-dimensional model comprises:
in a global fusion mode, obtaining target three-dimensional data of all frames generated by the three-dimensional scanner;
determining a second rotation-translation relationship between the target three-dimensional data of all frames and a reference coordinate system based on a common feature of the target three-dimensional data of all frames;
fusing the target three-dimensional data of all frames according to the second rotation-translation relationship and a first preset fusion parameter to generate a first three-dimensional model, the reference coordinate system being a coordinate system in which the first three-dimensional model is located, wherein the first preset fusion parameter comprises a first point distance.

4. The system according to claim 3, wherein the computing module obtains a signal indicating that the three-dimensional scanner has completed scanning, and enters a global optimization mode based on the signal.

5. The system according to claim 2, wherein incremental data of the current first three-dimensional model is obtained, the incremental data is rendered, and the first three-dimensional model corresponding to the rendered incremental data is sent to the display module.

6. The system according to claim 1, wherein the display module further comprises an editing component, and the editing component is used to edit the first three-dimensional model displayed by the display module.

7. The system according to claim 1, wherein after the computing module generates the first three-dimensional model, the computing module generates and stores a project file according to a configuration file that has been set, the target three-dimensional data, and the first three-dimensional model; the project file is used for generating a second three-dimensional model on at least one other terminal, and the second three-dimensional model is the first three-dimensional model or a three-dimensional model generated by performing a calculation of a three-dimensional reconstruction according to the target three-dimensional data and a second preset fusion parameter.

8. The system according to claim 1, wherein the three-dimensional scanning system comprises a laser scanning mode, in the laser scanning mode, the image data comprises features of laser lines and features of marking points, a three-dimensional reconstruction is performed based on the features of the laser lines in the image data to generate point cloud three-dimensional data, a three-dimensional reconstruction is performed based on the features of marking points in the image data to generate marking point three-dimensional data, the target three-dimensional data comprises point cloud three-dimensional data and marking point three-dimensional data.

9. A three-dimensional scanning method applied to a three-dimensional scanner, comprising a plurality of image sensors, and the method comprises:
obtaining image data generated by the image sensors based on an object to be scanned;
performing a calculation of a three-dimensional reconstruction according to the image data to determine target three-dimensional data, and the target three-dimensional data being used to generate a first three-dimensional model corresponding to the object to be scanned, the target three-dimensional data comprising point cloud three-dimensional data corresponding to laser lines output by the three-dimensional scanner and marking point three-dimensional data corresponding to at least one marking point on the object to be scanned.

10. A three-dimensional scanning method applied to a terminal, comprising:
obtaining three-dimensional data of an object to be scanned generated by a three-dimensional scanner;
determining a target fusion mode according to a generation situation of a first three-dimensional model corresponding to the object to be scanned, and in the target fusion mode, performing a calculation of a three-dimensional reconstruction according to the three-dimensional data to generate the first three-dimensional model, the target fusion mode comprising a global fusion mode and/or a real-time fusion mode.

11. A three-dimensional scanning apparatus applied to a three-dimensional scanner comprising a plurality of image sensors, the apparatus comprising:
an acquisition unit, being used for acquiring image data generated by the image sensors based on an object to be scanned;
a determination unit, being used for performing a calculation of a three-dimensional reconstruction according to the image data to determine target three-dimensional data, and the target three-dimensional data being used to generate a first three-dimensional model corresponding to the object to be scanned, the target three-dimensional data comprising laser lines output by the three-dimensional scanner and three-dimensional data corresponding to at least one marking point on the object to be scanned.

12. A three-dimensional scanning apparatus applied to a terminal, the apparatus comprising:
an acquisition unit, being used for acquiring three-dimensional data of an object to be scanned generated by a three-dimensional scanner;
a generation unit, being used for determining a target fusion mode according to a generation situation of a first three-dimensional model corresponding to the object to be scanned, and in the target fusion mode, performing a calculation of a three-dimensional reconstruction according to the three-dimensional data to generate the first three-dimensional model, the target fusion mode comprising a global fusion mode and/or a real-time fusion mode.

13. A mobile computing module for a three-dimensional scanner, comprising a communication component and a computing component, the mobile computing module being communicatively connected to a three-dimensional scanner via the communication component to obtain image data generated by the three-dimensional scanner; the computing component performing a calculation of at least partial three-dimensional reconstruction on the image data; the mobile computing module is communicatively connected to a display module via the communication component to send a calculation result of the computing component to the display module, and the display module being used to display a three-dimensional model obtained based on the calculation result.

14. The mobile computing module according to claim 13, wherein a working mode of the computing component comprises a first working sub-mode, and the computing component obtains a first calculation result by performing a calculation on the image data in the first working sub-mode.

15. The mobile computing module according to claim 14, wherein the working mode of the computing component further comprises a second working sub-mode, and the computing component obtains a second calculation result by performing a calculation on the first calculation result through the second working sub-mode.

16. The mobile computing module according to claim 15, wherein the mobile computing module comprises a mode selection control, and the mobile computing module sends the first calculation result and/or the second calculation result to the display module in response to a triggering operation of the mode selection control.

17. The mobile computing module according to claim 14, wherein the computing component obtains the first calculation result by performing the calculation on the image data in the first working sub-mode, comprising:
the computing component extracting feature data from the image data, and obtaining point cloud data by performing a three-dimensional reconstruction according to the feature data, the first calculation result comprising the point cloud data.

18. The mobile computing module according to claim 15, wherein the computing component obtains the first calculation result by performing the calculation on the image data in the first working sub-mode, comprising:
the computing component extracting feature data from the image data, and obtaining point cloud data by performing a three-dimensional reconstruction according to the feature data, wherein the first calculation result comprising the point cloud data;
the computing component obtaining the second calculation result by performing the calculation on the first calculation result through the second working sub-mode, comprising:
splicing and fusing the point cloud data obtained by performing the three-dimensional reconstruction according to the feature data, and the second calculation result comprising the point cloud data that has been spliced and fused.

19. A three-dimensional scanning method applied to the mobile computing module according to any one of claims 13 to 18, comprising:
acquiring image data corresponding to an object to be measured generated by a three-dimensional scanner;
performing a calculation of at least partial three-dimensional reconstruction according to the image data, and sending a calculation result to a display module connected to the mobile computing component for display, and the display module being used for displaying a three-dimensional model of the object to be measured obtained based on the calculation result.

20. The method according to claim 19, wherein performing the calculation of at least partial three-dimensional reconstruction according to the image data comprises:
extracting feature data from the image data, and obtaining point cloud data by performing a three-dimensional reconstruction according to the feature data; and/or,
extracting feature data from the image data, obtaining point cloud data by performing a three-dimensional reconstruction according to the feature data, and fusing the point cloud data.

21. A three-dimensional scanning apparatus applied to the mobile computing module according to any one of claims 13 to 18, comprising:
an acquisition unit, being used for acquiring image data corresponding to an object to be measured generated by a three-dimensional scanner;
a computing unit, being used for performing a calculation of at least partial three-dimensional reconstruction according to the image data, and sending a calculation result to a display module connected to the mobile computing component for display, and the display module being used to display a three-dimensional model of the object to be measured obtained based on the calculation result.
